# FASCICULE DE BREVET EUROPEEN

(11) **EP 4 658 565 B1**
(45) Date de publication et mention de la délivrance du brevet: **23.09.2026**
(21) Numéro de dépôt: 24711195.8
(22) Date de dépôt: 14.03.2024
(51) Int. Cl.: B64G 1/10

(54) **ENGIN SPATIAL DOTÉ D'UN MODULE DE CONTRÔLE D'ORBITE AUTONOME ET D'UN MODULE D'ÉVITEMENT DE COLLISIONS, ET PROCÉDÉ DE GESTION AUTONOME DE L'ÉVITEMENT DES COLLISIONS ET DU MAINTIEN À POSTE D'UN ENGIN SPATIAL**
RAUMFAHRZEUG MIT EINEM AUTONOMEN ORBITSTEUERMODUL UND ANTIKOLLISIONSMODUL SOWIE AUTONOMES KOLLISIONSSCHUTZ- UND STATIONSBEWAHRUNGSVERFAHREN FÜR EIN RAUMFAHRZEUG
SPACECRAFT PROVIDED WITH AN AUTONOMOUS ORBIT CONTROL MODULE AND AN ANTI-COLLISION MODULE, AND ANTI-COLLISION AND STATION-KEEPING AUTONOMOUS MANAGEMENT METHOD FOR A SPACECRAFT

(30) Priorité: 17.03.2023 FR 2302348
(43) Date de publication de la demande: 10.12.2025
(73) Titulaire: Airbus Defence and Space SAS, 31402 Toulouse Cedex 4 (FR); Centre National d'Etudes Spatiales (CNES), 75001 Paris (FR)
(72) Inventeur: OLYMPIO, Joris, 31402 Toulouse cedex 4 (FR); THOMASSIN, Jérôme, 31401 Toulouse Cedex 9 (FR)
(74) Mandataire: Santarelli
(86) Numéro de dépôt international: PCT/EP2024/056889
(87) Numéro de publication internationale: WO 2024/194152

(56) Documents cités:
- US-A1- 2022 227 503
- RUSCONI CHIARA MARIA PAOLA: "ASTERIA: Integration of Risk Collision Management in Autonomous Orbit Control", MASTER THESIS ID NUMBER 899854, 1 December 2020 (2020-12-01), pages 1 - 99, XP055970141, Retrieved from the Internet <URL:https://www.politesi.polimi.it/bitstream/10589/170342/3/TESI_ChiaraRusconi.pdf> [retrieved on 20221011]
- ENRICO STOLL ET AL: "Operational collision avoidance of small satellite missions", AEROSPACE CONFERENCE, 2013 IEEE, IEEE, 2 March 2013 (2013-03-02), pages 1 - 11, XP032397091, ISBN: 978-1-4673-1812-9, DOI: 10.1109/AERO.2013.6496955
- THOMASSIN JÉRÔME ET AL: "Predictive Autonomous Orbit Control Method for Low Earth Orbit Satellites", PAPER, INTERNATIONAL SYMPOSIUM ON SPACE FLIGHT DYNAMICS, MATSUYAMA, JAPAN, JUNE. 2017., 1 June 2017 (2017-06-01), pages 1 - 6, XP055970156, Retrieved from the Internet <URL:https://issfd.org/ISSFD_2017/paper/ISTS-2017-d-086__ISSFD-2017-086.pdf> [retrieved on 20221011]

## Description

### Domaine technique

La présente demande concerne un engin spatial doté d'un système informatique de commande autonome comportant à la fois un module de contrôle d'orbite autonome, pour le calcul de manœuvres de maintien à poste visant à maintenir l'engin dans une fenêtre de mission, et un module d'évitement de collision, pour le calcul de manœuvres de maintien à poste et d'évitement visant à éviter toute collision entre l'engin spatial et les éventuels objets secondaires se trouvant sur son orbite ou à proximité.

L'invention concerne plus particulièrement un satellite évoluant en orbite basse comme c'est le cas des satellites d'observation de la Terre.

### Art antérieur

Pour pouvoir effectuer sa mission, un satellite, par exemple en orbite basse, doit rester dans une fenêtre de maintien à poste. Les opérations de maintien à poste peuvent être faites de manière automatique, commandées depuis le sol ou de manière autonome. Dans ce dernier cas, l'engin spatial dispose de moyens de calcul et de contrôle de son orbite, dont un module informatique de Contrôle d'Orbite Autonome, ci-après nommé COA.

L'invention s'attache plus particulièrement à réduire les risques de collision pour un engin spatial équipé d'un COA, avec d'autres objets non-manœuvrants en conjonction avec l'orbite de l'engin spatial. Ces risques de collision doivent être gérés et peuvent affecter la mission.

La population grandissante de débris, par la conséquence du syndrome de Kessler et par la détection de débris de plus petite taille, pose le challenge de la gestion automatique ou autonome des évitements de collision.

La gestion des collisions impose des boucles de traitement et de calcul qui, aujourd'hui, sont gérés par un segment sol :
- réception de Messages de Données de Conjonctions (dits « CDM », CDM étant l'acronyme de *Conjunction Data Message*) transmis par un organisme international de surveillance centralisée tel que l'EUSST (acronyme de « *EUropean Space Surveillance and Tracking* ») ou le JSpoc (acronyme de *« Joint Space Operation Center »),*
- traitement des CDM ;
- calcul des manœuvres d'évitement de collision,
- envoi par télécommande au satellite desdites manœuvres d'évitement de collision.

Ces boucles de traitement et les échanges entre le segment sol et l'engin spatial utilisent les intervalles de temps limités où le satellite peut établir une communication avec la station au sol et créent une certaine latence dans l'implémentation et l'exécution des évitements. On réalise généralement des manœuvres d'évitement qui peuvent s'avérer à postériori inutiles et qui dégrade la performance du satellite dans l'exécution de sa mission. Enfin, le couplage entre l'évitement et les contraintes exigeantes de la mission demande un effort de réactivité constant.

La thèse de Chiara Maria Paola Rusconi intitulée : « *ASTERIA : Integration of Risk Collision Management in Autonomous Orbit Control* » divulgue un système embarqué et un procédé pour la gestion autonome à la fois du maintien à poste de l'engin spatial et de l'évitement des collisions. Un tel système nécessite encore d'être amélioré.

L'invention vise à proposer un système embarqué et un procédé pour la gestion autonome à la fois du maintien à poste de l'engin spatial et de l'évitement des collisions. Cette gestion autonome est avantageusement réalisée en prenant en compte les contraintes d'implémentation bord pour ne pas pénaliser l'exécution des tâches nécessaires à l'opérabilité de l'engin spatial, tout en garantissant un maximum de sécurité.

### Exposé de l'invention

Pour ce faire, l'invention propose un procédé pour la gestion de l'évitement de collisions et du maintien à poste d'un engin spatial, l'engin spatial comprenant un système de propulsion et de contrôle d'attitude, un système de navigation incluant un GNSS, et des organes de télécommunication pour l'échange de données avec un segment sol. Le procédé selon l'invention est caractérisé en ce que :
- l'engin spatial réceptionne des messages de données de conjonction, ci-après notés CDM, envoyés par un segment sol, lesdits CDM étant relatifs à au moins un rapprochement avec un objet secondaire susceptible d'entrer en collision avec l'engin spatial, chacun desdits CDMs décrivant des paramètres d'identification, de position, de vitesse, de taille et de covariance de l'objet secondaire ainsi qu'une date de plus proche passage dite date TCA,
- à chaque orbite, à une position définie sur l'orbite, par exemple à chaque nœud ascendant, par exemple détectée par le système de navigation (201) et un processus de calcul bord, on active, à bord de l'engin spatial, un module de contrôle d'orbite autonome, ci-après noté COA, pour l'établissement d'un plan correspondant à l'orbite courante, dit plan courant hors risque, le plan courant hors risque se présentant sous la forme d'un plan de manœuvres de maintien à poste au moins sur un horizon dit horizon de risque, l'horizon de risque comprenant l'orbite courante et s'étendant jusqu'à l'orbite contenant la date TCA la plus proche parmi les dates TCA des CDMs reçus,
- un module de filtrage à bord de l'engin spatial effectue un filtrage préliminaire des CDMs reçus en fonction de critères géométriques et/ou temporels, pour établir une liste de CDMs à risque,
- dans le cas où il résulte dudit filtrage préliminaire au moins un CDM à risque, on active, à bord de l'engin spatial, un module de gestion des risques de collision, ci-après noté ACA, qui :
   - estime (à bord de l'engin spatial) un niveau de risque de collision, dit niveau de risque à bord, en fonction de données de navigation bord (position, vitesse, covariance) fournies par le GNSS propagées à la date TCA dudit CDM à risque,
   - et élabore un plan de manœuvres sur un horizon de contrôle, dit plan courant de maintien à poste et d'évitement, pour satisfaire à la fois au maintien dans une fenêtre de mission et à la réduction du risque de collision avec l'objet secondaire, l'horizon de contrôle comprenant un nombre prédéterminé d'orbites dont l'orbite courante et étant inférieur à l'horizon de risque, le plan courant de maintien à poste et d'évitement étant élaboré comme suit :
      si le niveau de risque à bord précédemment évalué est inférieur ou égal à un seuil de risque prédéfini, dit seuil de risque bord, l'ACA conserve le plan courant hors risque en tant que plan courant de maintien à poste et d'évitement,
      si le niveau de risque à bord précédemment évalué est supérieur au seuil de risque bord, l'ACA élabore un nouveau plan de manœuvres sur l'horizon de contrôle à partir du plan courant hors risque, en supprimant au moins une manœuvre de maintien à poste dudit plan courant hors risque et/ou en remplaçant au moins une manœuvre de maintien à poste dudit plan courant hors risque par une ou plusieurs manœuvres additionnelles pour le maintien dans la fenêtre de mission et l'évitement, dite manœuvre d'évitement, le nouveau plan de manœuvres devenant le plan courant de maintien à poste et d'évitement. Lorsque l'ACA élabore ce nouveau plan de manœuvres à partir du plan courant hors risque, l'ACA effectue des modifications successives en partant du plan courant hors risque, chaque modification fournissant une nouvelle version de plan de manœuvres, et, à chacune des modifications effectuées, l'ACA réévalue le niveau de risque à bord avec la nouvelle version de plan de manœuvres et en fonction de données de navigation bord fournies par le GNSS propagées à la date TCA dudit CDM à risque.

A noter que dans toute la demande de brevet, l'expression « *manœuvre de maintien à poste* » est utilisée pour désigner toute manœuvre calculées par le COA. Par opposition, l'expression « *manœuvre d'évitement* » est utilisée pour désigner toute manœuvre calculée par l'ACA, bien qu'une telle manœuvre vise à garantir non seulement l'évitement mais aussi le maintien dans la fenêtre de mission.

A noter que l'horizon de risque s'étend de la date courante à la première date TCA associée à l'objet secondaire. Il sert à indiquer qu'il y a un risque et à en fixer la durée. L'horizon de contrôle concerne l'horizon de calcul de manœuvres d'évitement, typiquement de quelques orbites. Cet horizon va « glisser » à chaque orbite jusqu'à atteindre la date de TCA. L'intérêt est de permettre une meilleure robustesse du calcul des manœuvres. Comme on le comprendra mieux plus loin, il est préférable que cet horizon de contrôle ne soit pas trop long, pour pouvoir se mettre à jour des changements sur les paramètres de l'objet secondaire pouvant affecter le niveau de risque, mais aussi pas trop court, pour éviter de recalculer systématiquement des plans de maintien à poste et d'évitement car il faut quelques orbites pour réaliser un évitement, en particulier si l'engin spatial est équipé d'un système de propulsion fournissant des poussées très faibles.

Avantageusement, l'utilisation de données de bord telle que les données de navigation, actualisées en temps réel, connues par le satellite et non par le segment sol, présente un intérêt non négligeable à l'approche de l'évitement, notamment en permettant d'améliorer la réactivité de l'évitement et en l'effectuant dans les dernières heures, là où l'incertitude sur les données représentatives des CDMs est la plus faible.

Avantageusement, le satellite ayant la possibilité d'utiliser sa position calculée à bord, on supprime le besoin de propager par le calcul une position ultérieure du satellite et on accroit la précision des calculs. Avantageusement encore, les séquences de manœuvres d'évitement mises en œuvre par le satellite sont plus optimales et permettent d'optimiser l'exécution nominale de sa mission (au sens d'une performance attendue).

Le filtrage préliminaire des CDMs reçus et l'utilisation des données de navigation de l'engin spatial calculées à bord, en temps réel ou proche temps réel, selon l'invention permettent de filtrer plus finement les CDMs non à risque, réduisant ainsi le coût calculatoire bord. De plus, les calculs des manœuvres d'évitement par l'ACA bénéficient d'une précision accrue. Les calculs peuvent être effectués à bord permettant plus de réactivité, sans temps de latence entre les calculs et leur exécution généralement caractéristique d'une boucle bord-sol. Pour réduire la durée de calcul bord, il est également possible de réduire les modèles de propagation utilisés par l'ACA, l'impact de cette réduction restant acceptable à une date proche de la date TCA (c'est-à-dire sur l'horizon de contrôle).

Cette précision accrue, ainsi que l'utilisation de modèles de propagation réduits, permet de diminuer les ressources nécessaires à l'élaboration d'un plan de manœuvres permettant de satisfaire à la fois au maintien dans la fenêtre de mission et à la réduction du risque de collision avec l'objet secondaire. De même, l'élaboration du plan courant de maintien à poste et d'évitement à partir du plan courant hors risque par suppression ou modification d'une ou plusieurs manœuvres de maintien à poste permet de limiter à la fois les calculs nécessaires et l'impact sur la mission, puisque la ou les éventuelles manœuvres d'évitement calculées par l'ACA sont prévues sur des créneaux initialement utilisés pour des manœuvres de maintien à poste c'est-à-dire en dehors de créneaux réservées par la mission.

Dès lors, les ressources de l'engin spatial sont suffisantes pour l'élaboration d'un tel plan de manœuvres, et la gestion du risque de collision et du maintien à poste peut être assurée de façon autonome par l'engin spatial, sans intervention du sol.

Selon une caractéristique possible de l'invention, lorsque l'ACA élabore le nouveau plan de manœuvres à partir du plan courant hors risque, l'ACA supprime successivement, dans l'ordre chronologique inverse à partir de la date TCA dudit CDM à risque, les manœuvres de maintien à poste du plan courant hors risque, chaque suppression conduisant à une nouvelle version de plan de manœuvres, et l'ACA réévalue, à chaque suppression, le niveau de risque à bord avec ladite nouvelle version de plan de manœuvres. L'ACA procède ainsi tant que le niveau de risque à bord évalué reste supérieur au seuil de risque bord et que le nombre de manœuvres supprimées est inférieur à un nombre maximal prédéterminé de suppressions autorisées, l'ACA arrêtant les suppressions dès que le niveau de risque à bord évalué est inférieur au seuil de risque bord, la dernière nouvelle version de plan de manœuvres, qui a conduit à l'obtention d'un niveau de risque à bord inférieur au seuil de risque bord, devenant le plan courant de maintien à poste et d'évitement.

Lorsqu'une ou plusieurs suppressions de manœuvres de maintien à poste du plan courant hors risque permettent ainsi de réduire suffisamment le risque et de définir un plan courant de maintien à poste et d'évitement sans avoir à calculer de nouvelles manœuvres, il n'est pas impossible que ledit plan courant de maintien à poste et d'évitement conduise, en pratique, à une légère sortie de la fenêtre de mission nominale, mais à l'intérieur d'une fenêtre de mission élargie. Les inventeurs ont toutefois démontré que cette éventuelle sortie de fenêtre restait acceptable, d'autant que le plan courant de maintien à poste et d'évitement de l'ACA pourra être pris en compte par le COA lors de sa prochaine activation (à l'orbite suivante).

Selon une caractéristique possible de l'invention, si le niveau de risque bord réévalué reste supérieur au seuil de risque bord après suppression d'un nombre de manœuvres du plan courant hors risque égal au nombre maximal prédéterminé de suppressions autorisées, l'ACA supprime toutes les manœuvres du plan courant hors risque et calcule un ensemble de manœuvres d'évitement sur l'horizon de contrôle, ce calcul prenant en compte à la fois le maintien à poste et l'évitement, ledit ensemble de manœuvres d'évitement devenant le plan courant de maintien à poste et d'évitement.

Selon une caractéristique possible de l'invention, pour le calcul de toute manœuvre d'évitement, l'ACA résout un problème d'optimisation sous contraintes avec pour objectif la minimisation d'une fonction de risque CoPoC et pour contrainte la tenue dans la fenêtre de mission, la fonction CoPoC correspondant à un maximum de probabilité de collision dans des gammes prédéfinies de contraction et dilatation des covariances de l'engin spatial et de l'objet secondaire à la date TCA.

Selon une caractéristique possible de l'invention, l'ACA renvoie le plan courant de maintien à poste et d'évitement au système de commande aux fins de son exécution.

Selon une caractéristique possible de l'invention, le filtrage préliminaire des CDMs reçus comprend une étape de filtrage temporel consistant à sélectionner, parmi les CDM reçus (ou éventuellement parmi les CDMs retenus à l'issue d'une étape de filtrage géométrique décrite ci-après), le ou les CDMs dont l'écart temporel jusqu'à la TCA est inférieur à un nombre prédéterminé d'heures. Ce nombre prédéterminé d'heures peut être 24h ou 48h. Il est de préférence paramétrable et modifiable depuis le sol.

Selon une caractéristique possible de l'invention, le filtrage préliminaire des CDMs reçus comprend une étape de filtrage géométrique consistant à, pour chacun des CDMs reçus (ou éventuellement chacun des CDMs retenus à l'issue de l'étape de filtrage temporel décrite ci-avant) :
- calculer une distance entre une position prévisionnelle de l'engin spatial et une position supposée de l'objet secondaire à la date TCA dudit CDM,
- sélectionner le ou les CDMs pour lesquels la distance précédemment calculée est inférieure à une distance de filtrage prédéterminée. Cette distance de filtrage prédéterminée est par exemple 10km ou 15km ou 20km. Elle est de préférence paramétrable et modifiable depuis le sol.

Selon une caractéristique possible de l'invention, la propagation des données de navigation bord fournies par le GNSS s'effectue avec un modèle de propagation basé sur un modèle du potentiel gravitationnel terrestre avec un nombre de termes zonaux et tesseraux limités, un modèle de perturbation luni-solaire, et un modèle atmosphérique paramétrable suivant des données d'activité solaire et des paramètres de trainée. Les modèles, données et paramètres utilisés par le modèle de propagation sont fournis à l'engin spatial lors de sa mise en œuvre ; ils sont régulièrement mis à jour par le segment sol par exemple tous les mois ou à chaque fois qu'une évolution significative, notamment concernant l'activité solaire, est constatée. Ils sont envoyés à l'engin spatial systématiquement avec l'envoie des données CDM.

Selon une caractéristique possible de l'invention, toute estimation du niveau de risque à bord comprend :
- un calcul de propagation de l'orbite et de la covariance de l'engin spatial jusqu'à la date TCA dudit CDM à risque, en fonction de l'orbite calculée à bord de l'engin spatial fournie par le GNSS et du plan de manœuvres hors risque (s'il s'agit de la première évaluation du niveau de risque à bord avant élaboration d'un plan de maintien à poste et d'évitement) ou de la nouvelle version de plan de manœuvres (s'il s'agit d'une réévaluation du niveau de risque à bord suite à une modification du plan courant hors risque au cours de l'élaboration du plan courant de maintien à poste et d'évitement),
- un calcul de propagation supposée de l'orbite et de la covariance de l'objet secondaire à la date TCA dudit CDM à risque,
- un ajustement de la date TCA, et une correction des orbites et covariances de l'engin spatial et de l'objet secondaire propagées à la date TCA ajustée,
- l'évaluation du niveau de risque à bord s'effectuant sur la base des orbites et des covariances ainsi propagées à la date TCA ajustée.

Selon une caractéristique possible de l'invention, l'engin spatial reçoit un plan de mission du segment sol, lequel plan de mission définit des créneaux de mission réservés à la mission, des créneaux interdits à la mission et aux manœuvres pour satisfaire des contraintes système de l'engin spatial, telles que le rechargement des batteries, et des créneaux libres pouvant être utilisés pour le placement de manœuvres, telles que les manœuvres de maintien à poste calculées par le COA et la ou les manœuvres d'évitement calculées par l'ACA. En cas d'urgence on pourrait également utiliser des créneaux de mission pour les manœuvres, la mission étant alors dégradée.

De préférence, la ou les manœuvres d'évitement calculées par l'ACA sont prévues sur des créneaux libres du plan de mission antérieurs à une date d'évitement au plus tard, la date d'évitement au plus tard précédant la date TCA d'un nombre d'orbites ou d'heures prédéterminé. Ce nombre d'orbites ou d'heures prédéterminé peut être par exemple compris entre deux et quatre orbites ou entre deux et quatre heures. Il est de préférence paramétrable et modifiable par le segment sol.

Selon une caractéristique possible de l'invention, pour l'élaboration du plan courant de maintien à poste et d'évitement, la fenêtre de mission est une fenêtre de mission nominale ou une fenêtre de mission élargie en cohérence avec la mission. Tant la fenêtre nominale que la fenêtre élargie sont fournies par le commanditaire de la mission, et donc par le sol. L'utilisation d'une fenêtre élargie est requise lorsqu'aucune solution au problème d'optimisation sous contraintes que constitue le calcul d'une manœuvre d'évitement par l'ACA n'est satisfaisante au vue de la réduction du risque.

Ceci permet de faire l'évitement avec une sortie de la fenêtre de mission nominale qui soit acceptable. Puisque les manœuvres de plan courant de maintien à poste et d'évitement sont mieux calculées (qu'il s'agissent de manœuvres de maintien à poste calculées par le COA et conservées dans le plan final ou de manœuvres d'évitement calculées par l'ACA) que ce qui serait fait au sol sans connaissance des données de navigation bord temps réel et des manœuvres à venir, la taille de la fenêtre peut être réduite de façon significative.

Selon une caractéristique possible de l'invention, pour la vérification du maintien de l'engin spatial dans la fenêtre de mission (nominale ou élargie), l'ACA utilise un modèle prédictif basé sur une évolution quadratique de la position sur orbite de l'engin spatial, lequel modèle prédictif est fourni à l'ACA par le COA avec le plan courant hors risques, ledit modèle prédictif étant mis à jour par le COA à chaque activation du COA (et donc à chaque orbite, par exemple au nœud ascendant de l'orbite) en fonction de divers paramètres de vol parmi lesquels un éventuel écart entre une date théorique de passage au nœud ascendant, fournie sous forme d'éphémérides par le sol, et une date calculée à bord de passage au nœud ascendant de l'orbite courante, laquelle date calculée à bord peut être déterminée par un procédé de détermination d'évènement orbital utilisant les données fournies par le GNSS.

Selon une caractéristique possible de l'invention, suite à l'élaboration du plan courant de maintien à poste et d'évitement, un procédé de monitoring est mis en œuvre sur l'horizon de contrôle, dans lequel :
- le niveau de risque à bord est réévalué à chaque activation suivante du COA (c'est-à-dire au début des orbites suivantes, par exemple au nœud ascendant de l'orbite) avec ledit plan courant de maintien à poste et d'évitement et avec des données de navigation courantes fournies en temps réel par le GNSS et propagées à la date TCA dudit CDM à risque ou à sa date TCA ajustée,
- si le niveau de risque à bord ne décroît pas ou si la position courante calculée à bord de l'engin spatial diverge de la position prédite par l'ACA, l'ACA élabore un plan courant de maintien à poste et d'évitement corrigé, à partir du plan courant de maintien à poste et d'évitement, en supprimant toutes les manœuvres à venir sur l'horizon de contrôle et en recalculant de nouvelles manœuvres d'évitement pour le maintien dans la fenêtre de mission et l'évitement.

Selon une caractéristique possible de l'invention, l'ACA utilise un modèle prédictif basé sur une évolution quadratique de la position sur orbite de l'engin spatial pour la vérification du maintien de l'engin spatial dans la fenêtre de mission, et le procédé de monitoring comprend de plus une vérification dudit modèle quadratique, qui déclenche, en cas de divergence constatée dans le modèle quadratique, l'élaboration par l'ACA du nouveau plan courant correspondant au plan courant de maintien à poste et d'évitement corrigé.

Selon une caractéristique possible de l'invention, l'engin spatial évolue en orbite basse et la fenêtre de mission exige un maintien en Position sur Orbite et en RAAN (acronyme de l'anglais *Right Ascension of the Ascending Node* signifiant « ascension droite du nœud ascendant »

L'invention s'étend à un engin spatial comprenant un système de propulsion et de contrôle d'attitude, un système de navigation incluant un GNSS, et des organes de télécommunication pour l'échange de données avec un segment sol, caractérisé en ce qu'il est équipé d'un COA et d'un ACA configurés pour mettre en œuvre le procédé décrit ci-avant.

### Brève description des dessins

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
[Fig. 1] la figure 1 est une représentation schématique de deux objets évoluant l'un vers l'autre ; cette figure illustre la probabilité que ces deux objets entrent en collision, via une représentation de leur covariance respective qui traduit l'incertitude qui existe concernant la position et la vitesse de ces objets ;
[Fig. 2] la figure 2 montre une autre façon d'illustrer la probabilité que deux objets entrent en collision, avec l'utilisation d'une covariance combinée des deux objets ;
[Fig. 3] la figure 3 représente un plan de mission sous la forme d'une frise, qui définit divers types de créneaux relatifs à l'utilisation d'un engin spatial selon l'invention ;
[Fig. 4] la figure 4 est un graphisme représentant la trajectoire d'un engin spatial selon l'invention telle que prévue par le COA dudit engin et la trajectoire du même engin spatial telle que prévue par l'ACA dudit engin ;
[Fig.5] la figure 5 est une représentation schématique d'un engin spatial selon l'invention ;
[Fig.6] la figure 6 est une représentation schématique d'exemples d'horizons de contrôle par rapport aux horizons de risque.

Les éléments identiques représentés sur les figures précitées sont identifiés par des références numériques identiques.

### Description détaillée

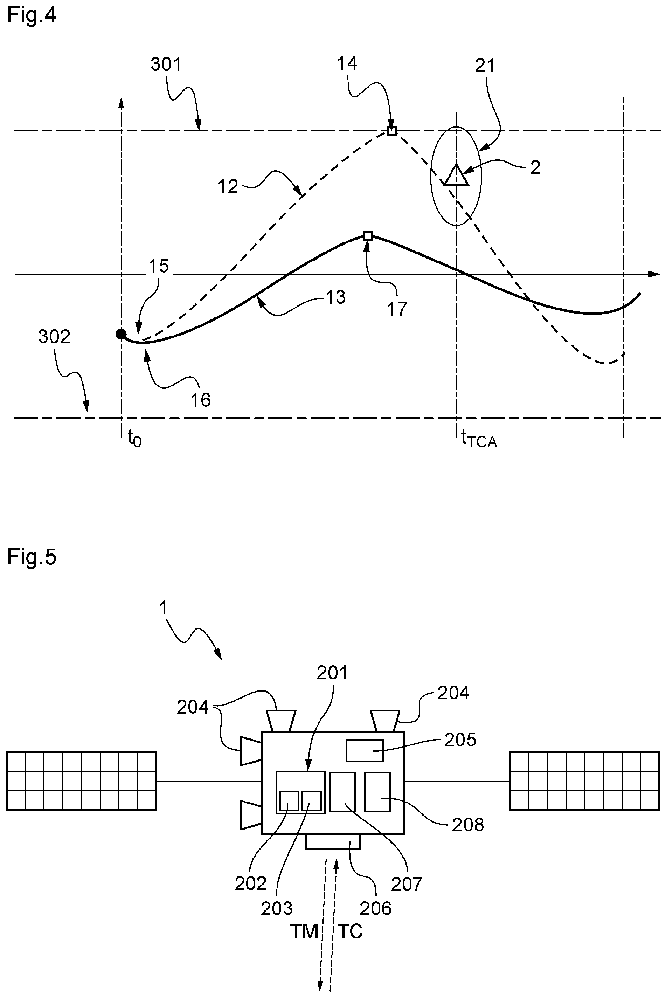

Le procédé de gestion de l'évitement de collisions et du maintien à poste selon l'invention s'applique à un engin spatial comprenant (voir fig. 5) :
- un système de navigation 201, comprenant notamment des ressources de calcul informatique 202 et un GNSS 203 (acronyme de l'anglais *Global Navigation Satellite Systems*) c'est-à-dire d'un dispositif de géolocalisation par satellites apte à donner en temps réel la position en trois dimensions et la vitesse en trois dimensions de l'engin spatial dans un référentiel inertiel,
- un système de propulsion 204 et de contrôle d'attitude 205, en communication avec le système de navigation 201,
- des organes de communication 206 pour l'échange de données avec un segment sol.

Dans toute la suite, par soucis de simplicité, le terme « *satellite* » est utilisé de manière non limitative et pourra désigner un engin spatial selon l'invention.

A noter que l'expression « *segment sol* » désigne le ou les centres au sol chargés de contrôler le satellite. Selon l'orbite du satellite, ses trajectoires, sa mission, etc., ainsi que le temps de visibilité du satellite par les différents centres au sol existants, il peut être envisagé d'utiliser, par exemple, pour le contrôle du satellite, plusieurs centres au sol distants et aptes à voir le satellite à des moments différents, le « segment sol » désignant alors l'ensemble des centres au sol utilisés. Lorsque plusieurs centres au sol sont utilisés pour le contrôle du satellite, les signaux de données montants, comme par exemple les signaux de télécommande désignés par TC, envoyés par le sol au satellite et/ou les signaux de données descendants, comme par exemple les signaux de télémétrie, désignés TM, envoyés par le satellite au sol peuvent être répartis sur les différents centres au sol. Si la visibilité du satellite par les centres au sol existants est insuffisante eu égard à la quantité de données à échanger avec le satellite ou pour d'autres raisons d'organisation des télécommunications, il est par exemple possible d'utiliser un ou des satellites relais. Les communications avec les satellites relais ou avec le sol viennent s'ajouter aux autres contraintes et entrainent des conséquences similaires, telles que l'interdiction de prévoir des manœuvres (de maintien à poste ou d'évitement) pendant certains créneaux dédiées aux communications.

De façon usuelle, les signaux TM envoyés par le satellite au segment sol comprennent des données de navigation fournies par le GNSS du satellite, telles que la position et la vitesse du satellite au dernier nœud ascendant et/ou la position et la vitesse courantes du satellite au moment de la communication TM.

De façon usuelle, les signaux TC envoyés par le segment sol au satellite comprennent des messages de conjonctions dits CDMs, relatifs à des objets secondaires susceptibles de se trouver sur la trajectoire du satellite.

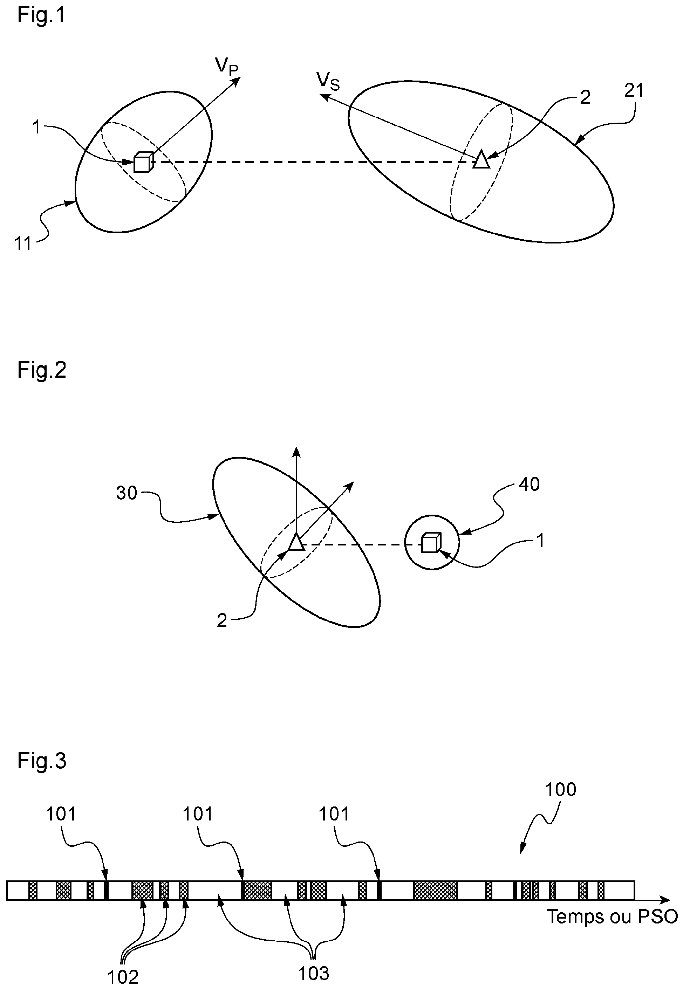

Les signaux TC peuvent aussi comprendre par exemple des données relatives à la mission, en particulier un plan de mission 100 (voir Fig.3) qui définit, en temps et/ou en position sur orbite, d'une part des points de reprise 101, des créneaux de mission 102 réservés à la mission et durant lesquels aucune manœuvre n'est permise en théorie, et d'autre part des créneaux 103 disponibles pour le placement de manœuvres.

Les signaux TC sont régulièrement envoyés par le segment sol, par exemple environ tous les quatre orbites ou toutes les six heures, lorsque le satellite est visible par le ou les centres au sol chargés de son contrôle. Des CDMs reçus par le segment sol sont par exemple transmis au satellite.

A l'instar des télécommandes TC, la télémétrie TM est envoyée par le satellite au segment sol de façon régulière, de préférence à chaque visibilité par le segment sol.

Dans un CDM, une conjonction est par exemple définie par un ou plusieurs des paramètres suivants :
- un objet primaire, ici le satellite,
- un objet secondaire, l'objet primaire et l'objet secondaire ayant chacun une covariance d'incertitude sur sa position et sa vitesse,
- et une date TCA, c'est-à-dire une date de passage au plus près (ou date de plus proche passage) qui correspond à l'instant où les deux objets sont censés être les plus proches l'un de l'autre.

Le CDM pourrait comprendre l'ensemble des informations listées précédemment. Le CDM pourrait également être simplifié en envoyant qu'une partie des informations en omettant des informations pouvant être calculées à bord.

Comme illustré à la Fig. 1, la probabilité de collision entre un objet primaire 1 se déplaçant à une vitesse v̅ₚ̅ et un objet secondaire 2 se déplaçant à une vitesse v̅ₛ̅ peut être basée sur l'intersection, à la date TCA, de l'ellipsoïde 11 représentant la covariance de l'objet primaire 1 à la position dudit objet primaire à la date TCA, et de l'ellipsoïde 21 représentant la covariance de l'objet secondaire 2 à la position de l'objet secondaire à la date TCA.

En variante, comme illustrée à la Fig. 2, la probabilité de collision peut être basée sur l'intersection, à la date TCA, d'une part de l'ellipsoïde combinée 30 ramenée à la position de l'objet secondaire (sinon primaire) à la date TCA, et d'autre part de la section HBR 40 ramenée à la position de l'objet primaire (respectivement secondaire) à la date TCA, la section HBR désignant une sphère ayant pour diamètre la somme des dimensions caractéristiques des deux objets (HBR étant l'acronyme de l'anglais *Hard Body Radius*)*.*

Dans toute la description détaillée, on considère que les CDMs reçus par le satellite, concernent au moins un objet secondaire. Dans le cas où plusieurs objets secondaires problématiques seraient identifiés par le segment sol et où des CDMs concernant des objets secondaires différents seraient par conséquent reçus par le satellite, le procédé selon l'invention décrit pour un seul objet secondaire, serait répété pour chacun des objets secondaires.

A noter que, statistiquement, un CDM peut être reçu par le segment sol jusqu'à sept jours avant sa date TCA, et que le segment sol reçoit généralement de la part des organismes internationaux de surveillance centralisée EUSST et JSpoc, pour chaque objet secondaire identifié, un CDM toutes les six à huit heures, ce qui correspond à quatre à cinq orbites pour le satellite dans le cas d'un satellite évoluant en orbite basse.

Outre le système de navigation et le système de propulsion et de contrôle d'attitude mentionnés supra, le satellite selon l'invention comprend :
- un module de contrôle d'orbite autonome ou COA 207, dont le rôle est de calculer des manœuvres de maintien à poste pour respecter la mission (cette dernière pouvant par exemple être une mission d'observation de la Terre),
- un module de gestion des risques de collision ou ACA, référencé 208, dont le rôle est de calculer des risques de collision et si besoin de proposer des stratégies d'évitement.

Le COA et l'ACA travaillent par exemple de façon collaborative et synchronisée. En effet, les manœuvres générées par le COA pourraient par exemple générer un risque de collision et afin d'éviter un tel effet, le COA est avantageusement coordonné avec l'ACA. De façon similaire, une stratégie d'évitement proposée par l'ACA pourrait par exemple être en contradiction avec le besoin mission et afin d'éviter un tel effet, l'ACA est avantageusement coordonné avec le COA.

Selon l'invention, le COA est par exemple activé à chaque orbite, au passage au nœud ascendant, et l'ACA est lui aussi activé à chaque orbite, après que le COA a terminé ses calculs, ce qui permet à l'ACA de prendre en compte les manœuvres de maintien à poste calculées par le COA.

Selon un exemple l'ACA pourrait être activé à chaque fois qu'un nouvel évènement est estimé à même de modifier la valeur du risque. Les évènements affectant le calcul du risque sont par exemple :
- la réception d'un nouveau CDM (qu'il s'agisse d'une mise à jour d'un risque connu, c'est-à-dire d'un CDM portant sur un objet secondaire ayant déjà fait l'objet d'un précédent CDM, ou de l'apparition d'un nouveau risque c'est-à-dire d'un CDM portant sur un nouvel objet secondaire n'ayant fait l'objet d'aucun CDM jusqu'ici),
- la planification d'une manœuvre, soit par le COA, soit par l'ACA.

D'autre part, au fur et à mesure que l'on se rapproche de la date TCA, l'incertitude, calculée à partir des données de navigation bord temps réel et propagée à la TCA, diminue. Donc, même en l'absence de nouvelles données, l'activation de l'ACA peut avantageusement avoir un intérêt pour mettre à jour un risque précédemment évalué et vérifier notamment si ce risque a disparu (c'est-à-dire si le niveau de risque associé est passé en dessous du seuil de risque bord), de sorte qu'il parait avantageux d'appeler l'ACA de façon périodique. L'activation de l'ACA et la mise à jour du risque peut également permettre de vérifier si le risque a évolué défavorablement par exemple au-dessus d'un seuil de risque bord. Par ailleurs, la gestion des ressources en calcul de l'engin spatial est une préoccupation qui pousse à limiter l'activation de l'ACA.

Ainsi le fait d'activer l'ACA une fois par orbite après que le COA a été activé (au nœud ascendant) et a terminé ses calculs s'avère par exemple être un bon compromis.

L'activation du COA sur l'orbite courante, par exemple au nœud ascendant, permet l'établissement d'un plan, dit plan courant hors risque, qui « correspond » à l'orbite courante en ce qu'il a été établi au commencement de cette orbite, et qui définit des manœuvres de maintien à poste (pour la réalisation de la mission) ne tenant pas compte des éventuels risques de collision. Ce plan courant hors risque est par exemple établi sur un horizon de calcul, dit horizon de risque, qui court jusqu'à la date TCA la plus proche concernant un objet secondaire donné. La durée de l'horizon de risque, c'est-à-dire la question de savoir combien de temps avant ladite date TCA on doit activer l'ACA pour l'élaboration d'une stratégie d'évitement dudit objet secondaire, répond par exemple à plusieurs critères.

Pour déterminer la borne supérieure de l'horizon de risque, deux critères antagonistes sont par exemple pris en compte. D'un côté, il est inutile d'anticiper trop longtemps à l'avance le risque car la propagation des incertitudes trop longtemps à l'avance nuit à la précision des estimations (le plus tard est le mieux par rapport à l'incertitude du risque). A l'inverse, prendre une décision d'évitement tôt permet de limiter l'amplitude de la manœuvre d'évitement en optimisant son placement sur un plus grand choix de créneaux de manœuvres et/ou de limiter l'impact de l'évitement sur la planification mission.

Par ailleurs, la capacité de manœuvre du satellite implique qu'il existe une date limite (et donc une borne inférieure pour l'horizon de risque), dite date d'évitement au plus tard, au-delà de laquelle il n'est plus possible de manœuvrer pour supprimer complètement le risque de collision. Cette date d'évitement au plus tard est définie notamment par un ou plusieurs des paramètres ci-dessous :
- la capacité d'accélération de la poussée du système de propulsion du satellite,
- la mission, qui impose des créneaux de manœuvres et des créneaux de mission (créneaux de mission durant lesquels l'engin doit rester stable dans la fenêtre de mission),
- La mise en configuration de poussée qui comprend notamment le préchauffage des tuyères ou le ralliement d'attitude, - le processus opérationnel bord qui dicte la durée nécessaire pour démarrer une manœuvre,
- la prise en compte d'anomalies qui empêcheraient la stratégie d'évitement d'être exécutée.

La date d'évitement au plus tard peut être estimée, par exemple, de 2 à 4 orbites ou 2 à 4 heures avant la date TCA du CDM à risque.

L'horizon de risque est par exemple fixé à un jour (24h) précédent la date TCA du CDM à risque concerné. En variante, l'horizon de risque peut être fixé à 48h. L'horizon de risque peut de surcroît être par exemple paramétrable depuis le sol et donc modifiable par l'envoi d'un signal de télécommande (TC) correspondant.

Selon l'invention, les CDMs reçus par l'engin spatial subissent un filtrage préliminaire à bord.

Les données EU-SST reçues par le segment sol sont par exemple déjà préfiltrées par le segment sol avant leur envoi au satellite, d'une part pour détecter les éventuelles erreurs SST (doublon, conjonction d'auto-collision) et d'autre part pour limiter la quantité de données à envoyer à bord. Cependant, un tel pré-filtrage réalisé au sol, ne tient compte ni des données de navigation du satellite ni des manœuvres de maintien à poste à venir. Un tel pré-filtrage, par le segment sol, reste très grossier notamment pour ne pas risquer d'écarter une conjonction qui, une fois recalculée avec la connaissance des manœuvres de maintien à poste et des données de navigation calculées en temps réel à bord, serait plus grande que prévue.

Il est par conséquent avantageux de réduire le nombre de CDMs que l'ACA va traiter à chaque orbite parmi les CDMs reçus par le satellite, comme le prévoit l'invention avec l'exécution d'un filtrage préliminaire à bord, sur la base de critères temporels et/ou géométriques.

Ce filtrage préliminaire peut par exemple comprendre une étape de filtrage temporel, qui consiste à supprimer les CDMs ayant des dates TCA trop lointaines. Ce filtrage temporel peut par exemple consister à supprimer les CDMs dont l'écart temporel jusqu'à la TCA est supérieur à un nombre prédéterminé d'heures, ce nombre pouvant être paramétrable ou fixé par exemple à 36h ou 48h. Le filtrage temporel peut ainsi considérer un intervalle plus long que celui de l'horizon de risque (par exemple si l'horizon de risque est de 24h et l'intervalle du filtrage temporel de 48h). Ceci permet de prendre en compte d'éventuels problèmes de communication TC entre le segment sol et le satellite, et/ou d'éventuels problèmes de communication entre les organismes internationaux de surveillance centralisée et le segment sol, et/ou d'éventuelles défaillances du segment sol ou des organismes internationaux de surveillance centralisée.

En variante ou en combinaison, le filtrage préliminaire peut comprendre par exemple une étape de filtrage géométrique, qui consiste à supprimer les CDMs pour lesquels la distance entre la position prévisionnelle du satellite et la position supposée de l'objet secondaire à la date TCA est supérieure à une distance de filtrage prédéterminée. Cette distance de filtrage est par exemple égale à 20 km, 15 km ou 10 km. Elle est par exemple avantageusement paramétrable, et donc modifiable depuis le sol par l'envoi d'un signal de télécommande.

Pour les besoins de cette étape de filtrage géométrique, la position prévisionnelle du satellite à la date TCA est calculée par le module de filtrage à bord du satellite, en fonction des position et vitesse, du satellite au nœud ascendant de l'orbite courante, fournie par le GNSS à bord, avec une haute précision. Par ailleurs, la position supposée de l'objet secondaire à la date TCA est celle fournie par le CDM. Enfin, afin que le filtrage préliminaire reste rapide et peu gourmand en calculs, la date TCA considérée est par exemple celle fournie par le CDM, sans aucun ajustement (contrairement à ce qui peut être fait dans le cadre du calcul d'un niveau de risque ou d'une manœuvre d'évitement, où l'utilisation d'une date TCA ajustée est préférée, comme expliqué plus loin).

Seule l'une des deux étapes de filtrage définies ci-dessus (filtrage temporel ou géométrique) peut être exécutée.

En variante et de préférence, les deux étapes de filtrage sont effectuées, dans un ordre ou dans l'autre. L'étape de filtrage exécutée en second est alors exécutée en considérant uniquement les CDMs retenus à l'issue de l'étape de filtrage effectuée en premier.

Selon un exemple de réalisation, si plusieurs CDMs ont été reçus pour un même objet secondaire et subsistent à l'issue des deux étapes de filtrages temporel et géométrique, une étape de filtrage préliminaire supplémentaire peut consister à ne sélectionner que le dernier CDM reçu par le satellite parmi les CDMs d'une même conjonction avec cet objet secondaire et restant à l'issue des étapes de filtrage précédentes. Notamment plusieurs conjonctions différentes peuvent exister pour un même objet du fait de répliques cycliques sur plusieurs orbites.

Si, à l'issue du filtrage préliminaire effectué à bord, il reste au moins un CDM, c'est qu'un risque de collision avec l'objet secondaire correspondant a été identifié. Le ou les CDMs retenus à l'issue du filtrage préliminaire sont dits CDMs à risque.

L'ACA va alors calculer le risque sur au moins un CDM parmi les CDMs filtrés. Au moins le risque pour le CDM le plus proche temporellement est calculé.

En cas de risque de collision identifié, l'ACA estime un niveau de risque représentatif du risque de collision entre le satellite et un objet secondaire à une date TCA, pour chacun des CDMs à risque retenus ou pour au moins un CDM à risque. Ce niveau de risque est dit niveau de risque à bord car il est calculé par les ressources informatiques du satellite (et non par le segment sol) et parce qu'il prend en compte des données de navigation calculées à bord du satellite et des manœuvres de maintien à poste calculées à bord du satellite.

Si un risque de collision est identifié, l'ACA est commandé, en fonction d'un niveau de risque, pour établir un plan de manœuvres sur un horizon de contrôle pour satisfaire à la fois au maintien dans la fenêtre de mission et à la réduction du risque de collision avec l'objet secondaire. Ce plan est dit « *plan courant de maintien à poste et d'évitement* », le terme « *courant* » dans l'expression précédente faisant référence au fait que ledit plan est établi durant l'orbite courante pour un horizon (l'horizon de contrôle) qui comprend cette orbite. L'horizon de contrôle comprend un nombre prédéterminé d'orbites incluant l'orbite courante, ce nombre étant par exemple compris entre 2 et 4, de préférence égal à 3.

Le calcul du niveau de risque par l'ACA repose sur la recherche de la probabilité de collision maximale (fonction CoPoC) compte tenu d'incertitudes. Un processus de contraction/dilatation sur les covariances est utilisé pour prendre en compte les incertitudes non modélisées dans la dynamique, la navigation et la détermination de l'orbite de l'objet secondaire.

Afin de réduire le temps de calcul, la probabilité de collision pour des covariances données (fonction PoC, dont la CoPoC est le maximum sur des gammes prédéterminées de covariances dilatées/contractées pour les objets primaire et secondaire) est évaluée par un développement analytique. $CoPoC = {max}_{Kp , Ks} PoC \left(Kp, Ks\right)$ ${P}_{c}^{\left[{t}_{1}, {t}_{2}\right]} = \frac{1}{{\left(2π\right)}^{3 / 2} \sqrt{det \left({Σ}_{{\overline{R}}^{0}}\right)}} {\int }_{{T}_{c}^{\left[{t}_{1}, {t}_{2}\right]}} exp \left(-\frac{1}{2}{\left(\vec{r}-{μ}_{{\overline{R}}^{0}}\right)}^{T}{Σ}_{{\overline{R}}^{0}}^{- 1}\left(\vec{r}-{μ}_{{\overline{R}}^{0}}\right)\right) d \vec{r} .$

Où ∑_{R} représente la somme des covariances et où µ_{R} représente le vecteur de position relative entre le primaire et le secondaire.

Il existe notamment la possibilité d'approximer cette intégrale à l'aide d'une somme finie.

L'état (position, vitesse) et la covariance initiale (hors dilation/contraction) sont fournis par le GNSS. Afin d'avoir une covariance initiale pour le satellite qui soit la plus faible possible, il est par exemple préféré d'équiper le satellite d'un récepteur GNSS de qualité, apte, par exemple, à mesurer, avec à une fréquence de 1 Hz, la position et la vitesse du satellite avec des valeurs d'écart type σ_{P} = 1m et σ_{V} = 0,003m/s respectivement. Un filtre de navigation est par exemple de préférence associé audit récepteur GNSS, pour le filtrage du bruit de mesure.

Le calcul du niveau de risque par l'ACA s'effectue sur la base de la propagation, jusqu'à la TCA, de l'état (position, vitesse) et de la covariance dilaté/contractée du satellite en prenant en considération, d'une part la position et la vitesse calculées à bord du satellite au moment de l'activation de l'ACA fournies par le GNSS du satellite, et d'autre part le plan de manœuvres hors risque du COA.

De préférence, le calcul de propagation est par exemple affiné par un ajustement (de quelques secondes) de la date TCA.

Cet ajustement peut par exemple consister à décaler la date TCA fournie par le CDM en fonction des position et vitesse relatives des deux objets. En d'autres termes, la date TCA ajustée peut être calculée à l'aide de la formule ${TCA}_{ajustée} = {TCA}_{duCDM} + dt ,$ avec dt = dot(dr, dv) / norm(dv)², où:
dot : produit scalaire
dr : vecteur position relative engin spatial/objet secondaire calculé à partir de la position de l'engin spatiale et de la position du secondaire, à la date TCA du CDM.
dv : vecteur vitesse relative engin spatial/objet secondaire, calculé à partir de la position de l'engin spatiale et la position du secondaire, à la date TCA du CDM.

Le modèle de propagation utilisé est par exemple un modèle simplifié basé sur :
- un modèle de potentiel terrestre ; par exemple un modèle de potentiel terrestre 6x6 (potentiel terrestre simplifié à 6 zonales et 6 tesserales),
- un modèle atmosphérique,
- Un modèle de perturbations luni-solaires,
- des données d'activité solaire
- des paramètres de trainée atmosphérique, qui permettent d'éviter les erreurs de propagation et de prédiction dues à la traînée en cas d'activité solaire forte, en particulier dans le cas d'un satellite en orbite basse. La prise en compte de la traînée peut se faire sur un coefficient balistique moyen, suivant l'activité solaire.

Le reste des incertitudes est par exemple géré par la dilatation/contraction de la covariance du satellite et de l'objet secondaire.

Les modèles, données et paramètres du modèle de propagation sont par exemple mémorisés par le satellite. Les modèles, données et paramètres du modèle de propagation peuvent par exemple être mis à jour au sol et envoyés au satellite.

A noter que le modèle de propagation est par exemple propre au satellite et fonction notamment de l'altitude du satellite concerné. La traînée joue par exemple un rôle important dans la propagation au premier ordre pour un satellite en orbite basse alors qu'elle devient quasi négligeable devant l'incertitude de la solution de navigation pour les missions à haute altitude. Ainsi, dans le cas d'un satellite en orbite basse, la prise en compte de la trainée atmosphérique dans le modèle de propagation permet de déterminer, à bord, l'état propagé du satellite à la date TCA fournie par le CDM ou à la date TCA ajustée, avec une grande précision.

En théorie, seul un modèle complet de la dynamique permet d'obtenir une précision adéquate pour l'évaluation du risque. Or l'utilisation d'un tel modèle complet requiert des ressources (en termes de capacité de calcul) supérieures à celles des satellites et obligerait à implémenter les calculs de propagation au sol.

Dans le procédé selon l'invention, les calculs de propagation faits par l'ACA prennent en compte la position et la vitesse calculées à bord du satellite, ainsi que la covariance du GNSS, qui décrit uniquement l'incertitude que l'on a sur la solution de navigation bord et est donc plus faible que la covariance généralement considérée par le segment sol, qui doit tenir compte d'autres sources d'incertitude. En outre les calculs de propagation faits par l'ACA prennent aussi en compte les manœuvres prévues par le COA avant la date TCA (du CDM ou ajustée). Notamment pour ces deux raisons, l'état du satellite à la date TCA (du CDM ou ajustée) peut avantageusement être déterminé à bord avec une précision plus grande que celle qui serait obtenue par le segment sol. En effet d'une part le segment sol ne connaît ni l'orbite temps réel précise calculée à bord du satellite ni les manœuvres prévues par le COA et d'autre part le segment sol doit utiliser une covariance plus grande que celle calculée à bord du satellite.

Dès lors, un modèle de propagation simplifié, qui ne prend en compte par exemple (dans le cas d'un satellite en orbite basse) qu'un modèle de potentiel terrestre, des données de perturbations luni-solaires, un modèle atmosphérique et des paramètres de trainée, devient acceptable, et les ressources en calcul du satellite sont suffisantes pour prendre en charge à bord l'évaluation et la gestion du risque.

Un algorithme d'intégration RK4 à pas fixe (par exemple de l'ordre de 60 secondes), peut être utilisé. La simplification des calculs est par exemple compensée par la précision accrue apportée par la prise en compte des position et vitesse calculées en temps réel à bord du satellite, de la covariance du GNSS et des manœuvres du COA.

Pour le calcul de la CoPoC, l'état (position, vitesse) présumé de l'objet secondaire à la date TCA ou à la date TCA ajustée est celui fourni par le CDM à risque. A l'instar de la covariance du satellite, la covariance de l'objet secondaire à la date TCA ou à la date TCA ajustée est considérée dans des gammes prédéfinies de dilatation/contraction.

Le maximum de probabilité de collision qui est obtenu dans ces gammes de dilatation/contraction des covariances du satellite et de l'objet secondaire correspond au niveau de risque à bord.

Ce niveau de risque à bord est alors comparé à un seuil de risque bord prédéfini. De façon avantageuse, le seuil de risque bord peut par exemple être supérieur à un « *seuil de risque sol* » qu'il conviendrait d'utiliser si le niveau de risque était calculé par le segment sol sans considération notamment de l'orbite calculée en temps réel à bord du satellite ou des manœuvres de maintien à poste à venir jusqu'à la date TCA du CDM à risque ou jusqu'à la date TCA ajustée. Le seuil de risque bord peut par exemple être choisi entre 1.10⁻⁴ et 5.10⁻⁴.

Si le niveau de risque évalué par l'ACA est inférieur ou égal au seuil de risque bord, l'ACA conserve le plan courant hors risque en tant que plan courant de maintien à poste et d'évitement.

Si le niveau de risque à bord évalué par l'ACA est supérieur au seuil de risque bord, l'ACA élabore un nouveau plan de manœuvres à partir du plan courant hors risque, pour pouvoir garantir l'évitement de l'objet secondaire.

Lorsque l'ACA élabore un nouveau plan de manœuvres, l'ACA procède par exemple, dans un premier temps par suppressions de manœuvres de maintien à poste du plan courant hors risque élaboré par le COA, comme expliqué ci-après. En effet, les manœuvres de maintien à poste prévues par le COA ont un impact sur le risque de collision, c'est-à-dire qu'elles peuvent avantageusement le réduire ou au contraire l'augmenter. L'ACA recherche donc, dans un premier temps, si la suppression d'une ou plusieurs de ces manœuvres peut avantageusement permettre de réduire suffisamment le risque sans sortir de la fenêtre de mission élargie.

L'ACA procède par exemple, dans un premier temps, par suppressions successives et vérifie, à chaque suppression, si le niveau de risque a baissé au point de passer en dessous du seuil de risque bord. A défaut, une manœuvre d'évitement peut être implémentée à la place d'une manœuvre de maintien à poste ou sur un créneau libre.

L'ACA supprime par exemple tout d'abord la manœuvre antérieure à la date TCA ajustée et qui est la plus proche de ladite date TCA ajustée. Le plan ainsi obtenu par suppression de la dernière manœuvre avant la date TCA ajustée définit une nouvelle version de plan de manœuvres.

L'ACA estime par exemple alors à nouveau le niveau de risque à bord comme il l'a fait précédemment, avec les données de navigation fournies par le GNSS propagées jusqu'à la date TCA ajustée mais avec la nouvelle version de plan de manœuvres en lieu et place du plan courant hors risque. Il compare le niveau de risque nouvellement estimé au seuil de risque bord.

Si le niveau de risque nouvellement estimé est par exemple inférieur ou égal au seuil de risque bord, l'ACA adopte la nouvelle version de plan de manœuvres en tant que plan courant de maintien à poste et d'évitement. Il n'est pas impossible que le plan courant de maintien à poste et d'évitement ainsi obtenu conduise à une sortie de la fenêtre de mission. Pour autant, ce plan sera corrigé par le COA, à l'appel suivant, de sorte que cette sortie de fenêtre éventuelle reste limitée à une fenêtre de mission élargie. Cette stratégie permet néanmoins de créer un décalage dans les manœuvres de maintien à poste permettant de créer une séparation avec l'objet secondaire à éviter.

Si le niveau de risque à bord nouvellement estimé est supérieur au seuil de risque bord, l'ACA élabore par exemple encore une nouvelle version de plan de manœuvres en poursuivant la modification du plan courant hors risque déjà modifié par la suppression de l'avant-dernière manœuvre de maintien à poste prévue avant la date TCA ajustée.

Il réévalue par exemple encore le niveau de risque bord avec cette nouvelle version de plan de manœuvres et compare le niveau de risque obtenu avec le seuil de risque bord.

Si le niveau de risque réévalué est inférieur ou égal au seuil de risque bord, l'ACA adopte par exemple la nouvelle version de plan de manœuvres en tant que plan courant de maintien à poste et d'évitement.

A l'inverse, si le niveau de risque réévalué est toujours supérieur au seuil de risque bord, l'ACA poursuit par exemple sa modification du plan courant hors risque en supprimant encore la manœuvre de maintien à poste qui suit dans le sens chronologique inverse.

Le nombre de manœuvres supprimées est par exemple limité pour permettre de rester dans une fenêtre de mission élargie.

L'ACA peut par exemple être programmé pour ne supprimer une manœuvre que s'il s'agit d'une manœuvre dans le plan orbital, visant à corriger une erreur en Position sur Orbite du satellite, et non une manœuvre hors plan visant à corriger une erreur en RAAN ou encore une manœuvre d'urgence visant à éviter une sortie de fenêtre imminente ou à ramener le satellite dans la fenêtre de mission après une sortie de fenêtre.

L'ACA procède par exemple aux suppressions successives, telles que décrites précédemment, jusqu'à ce que le niveau de risque à bord réévalué avec la dernière version de plan de manœuvres soit inférieur au seuil de risque bord, tout en évitant, par exemple de supprimer plus qu'un nombre prédéterminé de manœuvres de maintien à poste. Ce nombre est par exemple compris entre 1 et 3, de préférence égal à 2. La limitation du nombre de suppressions permet par exemple de ne pas conduire à une sortie de fenêtre trop importante, et ainsi stopper une stratégie de suppression a priori infructueuse pour basculer vers une nouvelle stratégie d'évitement. Si l'ACA est configuré pour conserver les manœuvres hors plan orbital et les manœuvres d'urgence et ne supprimer que des manœuvres non urgentes dans le plan orbital, l'ACA peut par exemple être autorisé à supprimer, dans le plan courant hors risque, toutes les manœuvres non urgentes prévues dans le plan orbital. On désigne par manœuvre urgente une manœuvre de correction de l'erreur en PSO (position sur orbite) déclenchée lorsqu'une sortie de fenêtre de mission est imminente ou déjà effective.

Si, après suppression du nombre prédéterminé de manœuvres de maintien à poste du plan courant hors risque (ou de la totalité des manœuvres non urgentes prévues dans le plan orbital par le plan hors risque), le niveau de risque à bord n'est toujours pas suffisamment réduit, le procédé selon l'invention prévoit par exemple que l'ACA calcule une ou plusieurs manœuvres d'évitement afin de garantir l'évitement sans sortir de la fenêtre de mission.

Dans ce cas, il est par exemple plus efficace en termes de temps total de calcul et de gestion des ressources informatiques du satellite, que l'ACA supprime par exemple toutes les manœuvres de maintien à poste du plan courant hors risque du COA et élabore un plan complet de manœuvres respectant à la fois la mission et l'évitement de l'objet secondaire.

Chaque manœuvre d'évitement calculée est par exemple prévue en remplacement d'une manœuvre de maintien à poste du plan hors risque établi initialement par le COA.

La ou les manœuvres d'évitement sont par exemple la solution au problème de maintien à poste et d'évitement de l'objet secondaire. Le calcul d'une manœuvre d'évitement repose par exemple sur la formulation générique d'un problème d'optimisation minimisant la CoPoC (celle qui sert également au calcul du risque) en prenant en compte des contraintes de tenue de fenêtre, notamment de tenue de fenêtre en position sur orbite.

On peut par exemple rechercher la direction de poussée dans le plan orbital qui minimise le plus la CoPoC, en utilisant toute la durée du créneau de manœuvre. Loin de la date TCA, généralement, la manœuvre est principalement tangentielle. Très proche de la date TCA, elle peut prendre une direction particulière, avec une composante radiale.

Dans le cas où ce problème serait insoluble, priorité est par exemple donnée à l'évitement. Une fenêtre élargie compatible avec la mission et fournie par exemple par le sol peut alors, dans un premier temps, être utilisée. Cette fenêtre élargie peut également être utilisée en cas de fonctionnement dégradé, lors d'une indisponibilité du GNSS notamment.

Comme expliqué plus haut, les calculs de propagation effectués par l'ACA peuvent montrer un écart entre la date TCA fournie par le CDM et la date TCA prédite par lesdits calculs de propagation. C'est pourquoi, comme par exemple dans le cadre du calcul d'un niveau de risque, l'ACA effectue par exemple le calcul d'une manœuvre d'évitement sur la base de la position, la vitesse et la covariance du satellite et de l'objet secondaire propagées à la date TCA ajustée (telle que définie plus haut). Ceci permet avantageusement d'augmenter plus encore la précision des calculs et de limiter les manœuvres d'évitement à effectuer pour éviter tout risque de collision.

Une fois élaboré par l'ACA, le plan courant de maintien à poste et d'évitement est par exemple transmis au système de navigation aux fins de son exécution. Chaque manœuvre dudit plan est définie par des durée et direction de poussée à appliquer par le système de propulsion à une date ou une position sur orbite donnée.

Ainsi le satellite est par exemple apte d'une part à estimer son attitude, par exemple à l'aide de capteurs STR (de l'anglais *Star Trackers*), et d'autre part à commander son attitude, par exemple à l'aide roues à réaction, afin de pouvoir exécuter chaque manœuvre dans la direction de poussée correspondante. Le satellite mémorise par exemple un code bord synchrone chargé de préparer les commandes (préchauffage, activation de la poussée, etc) à destination du système de propulsion. Le système de propulsion peut par exemple comprendre un ou plusieurs propulseurs électriques et/ou un ou plusieurs propulseurs plasmiques ou, plus généralement, tout système de propulsion à poussée faible.

A noter que l'élaboration du plan courant de maintien à poste et d'évitement par l'ACA est par exemple avantageusement une fonction asynchrone. Ceci permet d'allouer plus de temps de calcul à l'ACA.

La fig. 4 illustre un exemple d'effet, sur la trajectoire du satellite, du remplacement du plan courant hors risque du COA par un plan courant de maintien à poste et d'évitement calculé par l'ACA. La fenêtre de mission du satellite est repérée par les traits 301 et 302. La trajectoire du satellite calculée par le COA, c'est-à-dire la trajectoire du satellite issue de la mise en œuvre du plan courant hors risque, correspond au trait pointillé 12. Cette trajectoire traverse l'ellipsoïde 21 représentative de la covariance d'un débris 2 (objet secondaire), à une date TCA (t_{TCA}) fournie par un CDM relatif audit débris. Ceci signifie qu'un risque de collision existe entre le satellite et le débris 2, probablement avec un niveau de risque suffisant pour qu'une procédure d'évitement soit mise en œuvre par l'ACA.

Selon l'exemple de la figure 4, après calcul, le niveau risque évalué par l'ACA pour ce débris 2 s'avérant effectivement supérieur au seuil de risque bord, l'ACA élabore un plan courant de maintien à poste et d'évitement. La trajectoire du satellite issu de ce nouveau plan est représentée par le trait plein 13. Pour l'élaboration dudit plan, la dernière manœuvre de maintien à poste 14 prévue avant la date TCA par le plan courant hors risque du COA est supprimée par l'ACA. Dans le cas présent (exemple de la Fig. 4), cette suppression permet de réduire le risque mais entraîne une sortie immédiate de la fenêtre de mission {301-302}. L'élaboration du plan courant de maintien à poste et d'évitement par l'ACA se poursuit par la suppression de la manœuvre de maintien à poste 15 précédente (ou suivante dans l'ordre chronologique inverse), ce qui garantit la réduction du risque mais entraîne à terme une sortie de la fenêtre de mission. L'ACA ayant supprimé les deux manœuvres de maintien à poste prévues par le plan courant hors risque sur l'horizon de risque allant de t₀ à t_{TCA} sans parvenir à définir un plan qui satisfasse à la fois à la mission et à l'évitement, il recalcule des manœuvres d'évitement 16, 17 permettant de respecter à la fois le maintien dans la fenêtre de mission et l'évitement, c'est-à-dire définissant une trajectoire 13 du satellite qui d'une part reste dans la fenêtre de mission et d'autre part soit suffisamment distante, à la date TCA (t_{TCA}) ou à une date TCA ajustée, de l'ellipsoïde 21 représentant la covariance de l'objet secondaire.

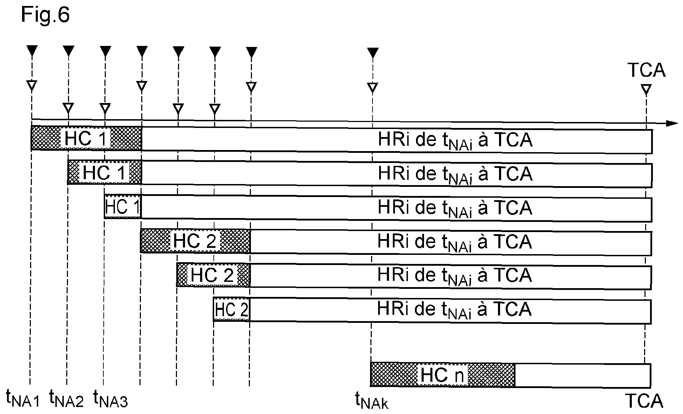

De préférence, le procédé selon l'invention comprend de plus la mise en œuvre par le couple COA/ACA d'une fonction de monitoring sur l'horizon de contrôle (glissant). L'horizon de contrôle comprend un nombre prédéterminé d'orbites, dont l'orbite courante. Ce nombre d'orbites est par exemple compris entre 2 et 4, par exemple égal à 3, comme illustré à la figure 6.

La figure 6 montre des exemples d'horizons de risque et d'horizons de contrôle. L'horizon de contrôle HC1 est initialement composée d'un nombre entier d'orbites commençant à l'activation courante. La stratégie de maintien et d'évitement est calculée sur toute la période de risque. Les manœuvres comprises dans l'horizon de contrôle sont figées. A chaque activation successive, l'horizon de contrôle réduit d'une orbite. Lorsqu'on arrive au bout de l'horizon de contrôle, un nouvel horizon de contrôle HC2 est défini. Les nouvelles manœuvres calculées à l'activation seront également figées sur cet horizon de contrôle. Les manœuvres pré-calculés sur une période de contrôle ne changent pas sauf si un écart significatif à la prédiction est constaté, auquel cas un recalcule complet du plan de manœuvre est effectué.

La validité des manœuvres du plan courant de maintien à poste et d'évitement est par exemple vérifiée au fur et à mesure de leur exécution. En cas d'écart entre l'état (position, vitesse) calculé en temps réel à bord du satellite fourni par le GNSS et l'état prévu par le plan, le plan courant de maintien à poste et d'évitement est mis à jour et/ou modifié de façon à garantir l'exécution de la mission et l'évitement de l'objet secondaire. Le monitoring porte par exemple aussi sur la performance d'évitement et de maintien à poste, le risque étant régulièrement (à chaque orbite) réévalué et le maintien dans la fenêtre de mission étant régulièrement contrôlé.

## Revendications

1. Procédé pour la gestion de l'évitement de collisions et du maintien à poste d'un engin spatial (1), l'engin spatial comprenant un système de propulsion (204) et de contrôle d'attitude (205), un système de navigation (201) incluant un GNSS (203), et des organes de télécommunication (206) pour l'échange de données avec un segment sol, comprenant les étapes suivantes :
- l'engin spatial réceptionne des messages de données de conjonction, ci-après notés CDM, envoyés par le segment sol, lesdits CDM étant relatifs à un rapprochement avec au moins un objet secondaire susceptible d'entrer en collision avec l'engin spatial, chacun desdits CDMs décrivant des paramètres d'identification, de position, de vitesse, de taille et de covariance de l'objet secondaire ainsi qu'une date de plus proche passage dite date TCA, :
- à chaque orbite, à une position définie sur l'orbite, on active, à bord de l'engin spatial, un module de contrôle d'orbite autonome (207), ci-après noté COA, pour l'établissement d'un plan correspondant à l'orbite courante, dit plan courant hors risque, le plan courant hors risque se présentant sous la forme d'un plan de manœuvres de maintien à poste (14, 15) au moins sur un horizon de risque, l'horizon de risque comprenant l'orbite courante et s'étendant jusqu'à l'orbite contenant la date TCA la plus proche parmi les dates TCA des CDMs reçus,
- un module de filtrage à bord de l'engin spatial, effectue un filtrage préliminaire des CDMs reçus en fonction de critères géométriques et/ou temporels, pour établir une liste de CDMs à risque,
- dans le cas où il résulte du filtrage préliminaire au moins un CDM à risque, on active, à bord de l'engin spatial, un module de gestion des risques de collision (208), ci-après noté ACA, qui
- estime un niveau de risque de collision, dit niveau de risque à bord, en fonction de données de navigation bord fournies par le GNSS (203) propagées à la date TCA dudit CDM à risque,
- et élabore un plan de manœuvres sur un horizon de contrôle, dit plan courant de maintien à poste et d'évitement, pour satisfaire à la fois au maintien dans une fenêtre de mission (301-302) et à la réduction du risque de collision avec l'objet secondaire, l'horizon de contrôle comprenant un nombre prédéterminé d'orbites dont l'orbite courante et étant inférieur à l'horizon de risque, le plan courant de maintien à poste et d'évitement étant élaboré comme suit :
- si le niveau de risque à bord précédemment évalué est inférieur ou égal à un seuil de risque prédéfini, dit seuil de risque bord, l'ACA conserve le plan courant hors risque en tant que plan courant de maintien à poste et d'évitement,
- si le niveau de risque à bord précédemment évalué est supérieur au seuil de risque bord, l'ACA élabore un nouveau plan de manœuvres à partir du plan courant hors risque, en supprimant au moins une manœuvre de maintien à poste dudit plan courant hors risque et/ou en remplaçant au moins une manœuvre de maintien à poste dudit plan courant hors risque par une manœuvre additionnelle (16, 17) pour le maintien dans la fenêtre de mission et l'évitement, dite manœuvre d'évitement, le nouveau plan de manœuvres devenant le plan courant de maintien à poste et d'évitement,
et en ce que lorsque l'ACA élabore le nouveau plan de manœuvres à partir du plan courant hors risque, l'ACA (208) effectue des modifications successives en partant du plan courant hors risque, chaque modification fournissant une nouvelle version de plan de manœuvres, et, à chacune des modifications effectuées, l'ACA réévalue le niveau de risque à bord avec la nouvelle version de plan de manœuvres et en fonction de données de navigation bord fournies par le GNSS propagées à la date TCA dudit CDM à risque.

2. Procédé pour la gestion selon la revendication 1, dans lequel, lorsque l'ACA élabore le nouveau plan de manœuvres à partir du plan courant hors risque, l'ACA (208) supprime successivement, dans l'ordre chronologique inverse à partir de la date TCA dudit CDM à risque, les manœuvres de maintien à poste du plan courant hors risque, chaque suppression conduisant à une nouvelle version de plan de manœuvres, et l'ACA réévalue, à chaque suppression, le niveau de risque à bord avec ladite nouvelle version de plan de manœuvres, et ce tant que le niveau de risque à bord évalué reste supérieur au seuil de risque bord et que le nombre de manœuvres supprimées est inférieur à un nombre maximal prédéterminé de suppressions autorisées, l'ACA arrêtant les suppressions dès que le niveau de risque à bord évalué est inférieur au seuil de risque bord, la dernière nouvelle version de plan de manœuvres, qui a conduit à l'obtention d'un niveau de risque à bord inférieur au seuil de risque bord, devenant le plan courant de maintien à poste et d'évitement.

3. Procédé pour la gestion selon la revendication 2, dans lequel, si le niveau de risque bord réévalué reste supérieur au seuil de risque bord après suppression d'un nombre de manœuvres du plan courant hors risque égal au nombre maximal prédéterminé de suppressions autorisées, l'ACA supprime toutes les manœuvres du plan courant hors risque et calcule un ensemble de manœuvres d'évitement sur l'horizon de contrôle, ce calcul prenant en compte à la fois le maintien à poste et l'évitement, ledit ensemble de manœuvres d'évitement devenant le plan courant de maintien à poste et d'évitement.

4. Procédé selon l'une des revendications 1 à 3, dans lequel, pour le calcul de toute manœuvre d'évitement, l'ACA résout un problème d'optimisation sous contraintes avec pour objectif la minimisation d'une fonction de risque CoPoC et pour contrainte la tenue dans la fenêtre de mission, la fonction CoPoC correspondant à un maximum de probabilité de collision dans des gammes prédéfinies de contraction et dilatation des covariances de l'engin spatial et de l'objet secondaire à la date TCA.

5. Procédé selon l'une des revendications 1 à 4, dans lequel l'ACA renvoie le plan courant de maintien à poste et d'évitement au système de commande aux fins de son exécution.

6. Procédé selon l'une des revendications 1 à 5, dans lequel le filtrage préliminaire des CDMs comprend une étape de filtrage temporel consistant à sélectionner, parmi les CDMs reçus, le ou les CDMs dont l'écart temporel jusqu'à la date TCA est inférieur à un nombre prédéterminé d'heures.

7. Procédé selon l'une des revendications 1 à 6, dans lequel, dans le filtrage préliminaire des CDMs reçus comprend une étape de filtrage géométrique consistant à, pour chacun des CDMs reçus ou chacun des CDMs retenus à l'issue de l'étape de filtrage temporel :
- calculer une distance entre une position prévisionnelle de l'engin spatial et une position supposée de l'objet secondaire à la date TCA dudit CDM,
- sélectionner le ou les CDMs pour lesquels la distance précédemment calculée est inférieure à une distance de filtrage prédéterminée.

8. Procédé selon l'une des revendications 1 à 7, dans lequel la propagation des données de navigation bord fournies par le GNSS s'effectue avec un modèle de propagation basé sur un modèle de potentiel gravitationnel terrestre, un modèle de perturbation luni-solaire et un modèle atmosphérique intégrant des paramètres d'activité solaire et des paramètres de trainée fournis par le segment sol.

9. Procédé selon l'une des revendications 1 à 8, toute estimation du niveau de risque à bord comprend :
- un calcul de propagation de l'orbite et de la covariance de l'engin spatial jusqu'à la date TCA dudit CDM à risque, en fonction de l'orbite de l'engin spatial fournie par le GNSS et du plan de manœuvres hors risque ou de la nouvelle version de plan de manœuvres,
- un calcul de propagation de l'orbite et de la covariance de l'objet secondaire à la date TCA supposée dudit CDM à risque,
- un ajustement de la date TCA, et une correction des orbites et covariances de l'engin spatial et de l'objet secondaire propagées à la date TCA ajustée,
- l'évaluation du niveau de risque à bord s'effectuant sur la base des orbites et des covariances ainsi propagées à la date TCA ajustée.

10. Procédé selon l'une des revendications 1 à 9, dans lequel l'engin spatial reçoit un plan de mission (100) du segment sol, lequel plan de mission définit des créneaux de mission (102) réservés à la mission et des créneaux libres (103) pouvant être utilisés pour le placement de manœuvres, les manœuvres de maintien à poste calculées par le COA et la ou les manœuvres d'évitement calculées par l'ACA étant prévues sur des créneaux libres du plan de mission.

11. Procédé selon la revendication 10, dans lequel la ou les manœuvres d'évitement calculées par l'ACA sont prévues sur des créneaux libres du plan de mission antérieurs à une date d'évitement au plus tard, la date d'évitement au plus tard précédant la date TCA d'un nombre d'orbites ou d'heures prédéterminé.

12. Procédé selon l'une des revendications 1 à 11, dans lequel, pour l'élaboration du plan courant de maintien à poste et d'évitement, la fenêtre de mission est une fenêtre de mission nominale ou une fenêtre de mission élargie, la fenêtre de mission nominale ou la fenêtre de mission élargie étant prédéterminées en cohérence avec la mission.

13. Procédé selon l'une des revendications 1 à 12, dans lequel pour la vérification du maintien de l'engin spatial dans la fenêtre de mission, l'ACA utilise un modèle prédictif basé sur une évolution quadratique de la position sur orbite de l'engin spatial, lequel modèle prédictif est fourni à l'ACA par le COA avec le plan de manœuvres hors risques de l'orbite courante, ledit modèle prédictif étant mis à jour par le COA à chaque activation du COA lors de chaque orbite (par exemple à chaque nœud ascendant de l'orbite) en fonction de divers paramètres de vol parmi lesquels un écart entre une date théorique de passage au nœud ascendant, fournie sous forme d'éphémérides par le sol, et une date calculée à bord de passage au nœud ascendant de l'orbite courante.

14. Procédé selon l'une des revendications 1 à 13, dans lequel, suite à l'élaboration du plan courant de maintien à poste et d'évitement, un procédé de monitoring est mis en œuvre sur l'horizon de contrôle, dans lequel :
- le niveau de risque à bord est réévalué à chaque activation suivante du COA avec ledit plan courant de maintien à poste et d'évitement et avec des données de navigation courantes fournies en temps réel par le GNSS et propagées à la date TCA dudit CDM à risque,
- si le niveau de risque à bord ne décroît pas ou si la position courante calculée à bord de l'engin spatial diverge d'une position prédite par l'ACA, l'ACA élabore un plan courant de maintien à poste et d'évitement corrigé, à partir du plan courant de maintien à poste et d'évitement, en supprimant toutes les manœuvres à venir sur l'horizon de contrôle et en recalculant de nouvelles manœuvres d'évitement pour le maintien dans la fenêtre de mission et l'évitement.

15. Procédé selon les revendications 14, dans lequel l'ACA utilise un modèle prédictif basé sur une évolution quadratique de la position sur orbite de l'engin spatial pour la vérification du maintien de l'engin spatial dans la fenêtre de mission, et dans lequel le procédé de monitoring comprend de plus une vérification dudit modèle quadratique, qui déclenche, en cas de divergence constatée dans le modèle quadratique, l'élaboration par l'ACA du plan courant de maintien à poste et d'évitement corrigé.

16. Procédé selon l'une des revendications 1 à 15, dans lequel l'engin spatial évolue en orbite basse et dans lequel la fenêtre de mission exige un maintien en Position sur Orbite et en RAAN.

17. Engin spatial (1) comprenant un système de propulsion (201) et de contrôle d'attitude, un système de navigation (202) incluant un GNSS, des organes de télécommunication (203) pour l'échange de données (TC, TM) avec un segment sol, **caractérisé en ce qu'**il comprend un module de contrôle d'orbite autonome (204), dit COA, et un module de gestion des risques de collision (205), dit ACA, lesquels COA et ACA sont configurés pour mettre en œuvre un procédé pour la gestion de l'évitement de collisions et du maintien à poste de l'engin spatial selon l'une des revendications 1 à 16.

## Patentansprüche

1. Verfahren zur Verwaltung des Kollisionsschutzes und der Stationsbewahrung eines Raumfahrzeugs (1), wobei das Raumfahrzeug ein Antriebs- (204) und Lagesteuerungssystem (205), ein Navigationssystem (201) mit einem GNSS (203) sowie Telekommunikationselementen (206) zum Datenaustausch mit einem Bodensegment umfasst, umfassend die folgenden Schritte:
- das Raumfahrzeug empfängt vom Bodensegment gesendete Verbindungsdatennachrichten, im Folgenden CDM genannt, wobei sich die CDM auf eine Annäherung an mindestens ein sekundäres Objekt beziehen, das mit dem Raumfahrzeug kollidieren könnte, wobei jede der CDMs Parameter für die Identifizierung, Position, Geschwindigkeit, Größe und Kovarianz des sekundären Objekts sowie ein Datum des nächsten Vorbeiflugs, das sogenannte TCA-Datum, beschreibt:
- bei jeder Umlaufbahn, an einer definierten Position auf der Umlaufbahn, wird an Bord des Raumfahrzeugs ein autonomes Orbitsteuermodul (207), im Folgenden COA genannt, zur Erstellung eines Plans aktiviert, der der aktuellen Umlaufbahn entspricht und als risikofreier aktueller Plan bezeichnet wird, wobei der risikofreie aktuelle Plan, der sich in Form eines Manövrierplans zur Stationsbewahrung (14, 15) mindestens über einen Risikohorizont darstellt, wobei der Risikohorizont die aktuelle Umlaufbahn umfasst und sich bis zur Umlaufbahn erstreckt, die das nächstgelegene TCA-Datum der empfangenen CDMs enthält,
- ein Filtermodul an Bord des Raumfahrzeugs führt eine Vorfilterung der empfangenen CDMs nach geometrischen und/oder zeitlichen Kriterien durch, um eine Liste der gefährdeten CDMs zu erstellen,
- im Falle, dass sich aus der Vorfilterung mindestens eine risikobehaftete CDM ergibt, wird an Bord des Raumfahrzeugs ein Modul zur Verwaltung der Kollisionsrisiken (208), im Folgenden ACA, aktiviert, das
- ein Kollisionsrisikoniveau, das sogenannte Risikoniveau an Bord, schätzt, basierend auf den vom GNSS (203) bereitgestellten Bordnavigationsdaten, die zum TCA-Datum der risikobehafteten CDM ausgebreitet werden,
- und einen Manövrierplan über einen Steuerhorizont, den sogenannten aktuellen Stationsbewahrungs- und Schutzplan, ausarbeitet, um sowohl die Einhaltung eines Missionsfensters (301-302) als auch die Reduzierung des Kollisionsrisikos mit dem sekundären Objekt zu erfüllen, wobei der Steuerhorizont eine vorbestimmte Anzahl von Umlaufbahnen umfasst, deren aktuelle Umlaufbahn kleiner als der Risikohorizont ist, wobei der aktuelle Stationsbewahrungs- und Schutzplan wie folgt ausgearbeitet wird:
- wenn das zuvor bewertete Risikoniveau an Bord kleiner oder gleich einer vordefinierten Risikoschwelle ist, der sogenannten Bordrisikoschwelle, behält das ACA den risikofreien aktuellen Plan als aktuellen Stationsbewahrungs- und Schutzplan bei,
- wenn das zuvor bewertete Risikoniveau an Bord höher ist als die Bordrisikoschwelle, arbeitet das ACA einen neuen Manövrierplan ausgehend vom risikofreien aktuellen Plan aus, indem er mindestens ein Manöver zur Stationsbewahrung des risikofreien aktuellen Plans löscht und/oder mindestens ein Manöver zur Stationsbewahrung des risikofreien aktuellen Plans durch ein zusätzliches Manöver (16, 17) zur Bewahrung im Einsatzfenster und zum Schutz, das sogenannte Schutzmanöver, ersetzt, wobei der neue Manövrierplan zum aktuellen Stationsbewahrungs- und Schutzplan wird,
und dass, wenn das ACA den neuen Manövrierplan ausgehend vom aktuellen risikofreien Plan ausarbeitet, das ACA (208) sukzessive Änderungen ausgehend vom aktuellen risikofreien Plan vornimmt, wobei jede Änderung eine neue Version des Manövrierplans bereitstellt, und bei jeder der vorgenommenen Änderungen das ACA das Risikoniveau an Bord mit der neuen Version des Manövrierplans und ausgehend von den vom GNSS bereitgestellten Bordnavigationsdaten neu bewertet, die am TCA-Datum der risikobehafteten CDM ausgebreitet werden.

2. Verwaltungsverfahren nach Anspruch 1, wobei, wenn das ACA den neuen Manövrierplan ausgehend von dem aktuellen risikofreien Plan ausarbeitet, das ACA (208) nacheinander, in umgekehrter chronologischer Reihenfolge ab dem TCA-Datum der risikobehafteten CDM, die Manöver zur Stationsbewahrung des risikofreien aktuellen Plans löscht, wobei jede Löschung zu einer neuen Version des Manövrierplans führt, und das ACA, bei jeder Löschung, das Risikoniveau an Bord mit der neuen Version des Manövrierplans erneut bewertet, und zwar so lange, wie das bewertete Risikoniveau an Bord über der Bordrisikoschwelle bleibt und die Anzahl der gelöschten Manöver unter einer vorbestimmten maximalen Anzahl zulässiger Löschungen liegt, wobei das ACA die Löschungen stoppt, sobald das bewertete Risikoniveau an Bord unter der Bordrisikoschwelle liegt, wobei die letzte neue Version des Manövrierplans, die dazu geführt hat, dass das Risikoniveau an Bord unter der Schwelle des Bordrisikos liegt, zum aktuellen Stationsbewahrungs- und Schutzplan wird.

3. Verwaltungsverfahren nach Anspruch 2, wobei, wenn das erneut bewertete Risikoniveau nach dem Löschen einer Anzahl von Manövern aus dem risikofreien aktuellen Plan, die der vorbestimmten maximalen Anzahl zulässiger Löschungen entspricht, höher bleibt als die Bordrisikoschwelle, das ACA alle Manöver aus dem risikofreien aktuellen Plan löscht und eine Reihe von Schutzmanövern über den Steuerhorizont berechnet, wobei diese Berechnung sowohl die Stationsbewahrung als auch den Schutz berücksichtigt, wobei die Reihe von Schutznanövern zum aktuellen Stationsbewahrungs- und Schutzplan wird.

4. Verfahren nach einem der Ansprüche 1 bis 3, wobei das ACA zur Berechnung eines Schutzmanövers ein Optimierungsproblem unter Beanspruchung mit dem Ziel der Minimierung einer CoPoC-Risikofunktion und zur Beanspruchung des Haltens im Missionsfenster löst, wobei die CoPoC-Funktion einer maximalen Kollisionswahrscheinlichkeit in vordefinierten Bereichen der Kontraktion und Ausdehnung der Kovarianzen des Raumfahrzeugs und des sekundären Objekts zum TCA-Datum entspricht.

5. Verfahren nach einem der Ansprüche 1 bis 4, wobei das ACA den aktuellen Stationsbewahrungs- und Schutzplan an das Steuersystem zur Ausführung zurücksendet.

6. Verfahren nach einem der Ansprüche 1 bis 5, wobei die Vorfilterung der CDMs einen zeitlichen Filterschritt umfasst, der darin besteht, aus den empfangenen CDMs die CDM oder die CDMs auszuwählen, deren zeitliche Differenz bis zum TCA-Datum weniger als eine vorbestimmte Anzahl von Stunden beträgt.

7. Verfahren nach einem der Ansprüche 1 bis 6, wobei die Vorfilterung der empfangenen CDMs einen geometrischen Filterschritt umfasst, der für jede der empfangenen CDMs oder jede der am Ende des zeitlichen Filterschritts ausgewählten CDMs aus Folgendem besteht:
- Berechnen eines Abstands zwischen einer prognostizierten Position des Raumfahrzeugs und einer angenommenen Position des sekundären Objekts zum TCA-Datum des CDM,
- Auswählen der CDM oder der CDMs, bei der/denen der zuvor berechnete Abstand kleiner ist als ein vorbestimmter Filterabstand.

8. Verfahren nach einem der Ansprüche 1 bis 7, wobei die Ausbreitung der vom GNSS bereitgestellten Bordnavigationsdaten mit einem Ausbreitungsmodell erfolgt, das auf einem Erdgravitationspotenzialmodell, einem Mond-Sonnen-Störungsmodell und einem atmosphärischen Modell basiert, das Sonnenaktivitätsparameter und vom Bodensegment bereitgestellte Schleppparameter integriert.

9. Verfahren nach einem der Ansprüche 1 bis 8, wobei jede Schätzung des Risikoniveaus an Bord Folgendes umfasst:
- eine Berechnung der Ausbreitung der Umlaufbahn und der Kovarianz des Raumfahrzeugs bis zum TCA-Datum der risikobehafteten CDM in Abhängigkeit von der vom GNSS bereitgestellten Umlaufbahn des Raumfahrzeugs und des risikofreien Manövrierplans oder der neuen Version des Manövrierplans,
- eine Berechnung der Ausbreitung der Umlaufbahn und der Kovarianz des sekundären Objekts zum angenommenen TCA-Datum der risikobehafteten CDM,
- eine Anpassung des TCA-Datums und eine Korrektur der Umlaufbahnen und Kovarianzen des Raumfahrzeugs und des sekundären Objekts, die zum angepassten TCA-Datum ausgebreitet werden,
- die Bewertung des Risikoniveaus an Bord auf der Grundlage der Umlaufbahnen und der so ausgebreiteten Kovarianzen zum angepassten TCA-Datum.

10. Verfahren nach einem der Ansprüche 1 bis 9, wobei das Raumfahrzeug einen Missionsplan (100) vom Bodensegment erhält, wobei der Missionsplan Missionsslots (102), die für die Mission reserviert sind, und freie Slots (103), die für das Platzieren von Manövern verwendet werden können, reserviert, wobei die von der COA berechneten Stationsbewahrungsmanöver und das oder die von dem ACA berechneten Schutzmanöver in freien Slots des Missionsplans vorgesehen sind.

11. Verfahren nach Anspruch 10, wobei das oder die von dem ACA berechneten Schutzmanöver in freien Slots des Missionsplans vorgesehen sind, die spätestens einem Schutzdatum vorliegen, wobei das Schutzdatum spätestens dem TCA-Datum einer vorbestimmten Anzahl von Umläufen oder Stunden vorausgeht.

12. Verfahren nach einem der Ansprüche 1 bis 11, wobei das Missionsfenster für die Ausarbeitung des aktuellen Stationsbewahrungs- und Schutzplans ein nominales Missionsfenster oder ein erweitertes Missionsfenster ist, wobei das nominale Missionsfenster oder das erweiterte Missionsfenster in Übereinstimmung mit der Mission vorbestimmt ist.

13. Verfahren nach einem der Ansprüche 1 bis 12, wobei das ACA zur Überprüfung der Bewahrung des Raumfahrzeugs innerhalb des Missionsfensters ein Vorhersagemodell verwendet, das auf einer quadratischen Entwicklung der Position auf der Umlaufbahn des Raumfahrzeugs basiert, welches Vorhersagemodell dem ACA vom COA mit dem risikofreien Manövrierplan der aktuellen Umlaufbahn bereitgestellt wird, wobei das Vorhersagemodell von der COA bei jeder Aktivierung der COA während jeder Umlaufbahn (beispielsweise an jedem aufsteigenden Knoten der Umlaufbahn) in Abhängigkeit von verschiedenen Flugparametern aktualisiert wird, darunter eine Differenz zwischen einem theoretischen Datum des Übergangs zum aufsteigenden Knoten, das in Form von Ephemeriden vom Boden bereitgestellt wird, und einem an Bord berechneten Datum des Übergangs zum aufsteigenden Knoten der aktuellen Umlaufbahn.

14. Verfahren nach einem der Ansprüche 1 bis 13, wobei nach der Ausarbeitung des aktuellen Stationsbewahrungs- und Schutzplans ein Überwachungsverfahren über den Steuerhorizont implementiert wird, wobei:
- das Risikoniveau an Bord wird bei jeder nachfolgenden Aktivierung des COA mit dem aktuellen Stationsbewahrungs- und Schutzplan und mit laufenden Navigationsdaten, die vom GNSS in Echtzeit bereitgestellt und zum TCA-Datum der risikobehafteten CDM ausgebreitet werden, neu bewertet,
- wenn das Risikoniveau an Bord nicht abnimmt oder wenn die aktuelle Position an Bord des Raumfahrzeugs von einer von der ACA vorhergesagten Position abweicht, erstellt das ACA einen korrigierten aktuellen Stationsbewahrung- und Schutzplan, indem es alle anstehenden Manöver am Steuerhorizont löscht und neue Schutzmanöver zur Aufrechterhaltung im Missionsfenster und den Schutz berechnet.

15. Verfahren nach Anspruch 14, wobei das ACA ein Vorhersagemodell verwendet, das auf einer quadratischen Entwicklung der Position auf der Umlaufbahn des Raumfahrzeugs basiert, um zu überprüfen, ob das Raumfahrzeug im Missionsfenster bewahrt wird, und wobei das Überwachungsverfahren weiter eine Überprüfung des quadratischen Modells umfasst, das bei einer in dem quadratischen Modell festgestellten Abweichung die Ausarbeitung des korrigierten aktuellen Statiosnbewahrungs- und Schutzplans auslöst.

16. Verfahren nach einem der Ansprüche 1 bis 15, wobei sich das Raumfahrzeug in einer niedrigen Umlaufbahn bewegt und wobei das Missionsfenster eine Bewahrung der Position in der Umlaufbahn und der RAAN erfordert.

17. Raumfahrzeug (1), umfassend ein Antriebs- (201) und Lagesteuerungssystem, ein Navigationssystem (202) einschließlich GNSS, Telekommunikationselemente (203) zum Datenaustausch (TC, TM) mit einem Bodensegment, **dadurch gekennzeichnet, dass** es ein autonomes Orbitsteuermodul (204), das sogenannte COA, und ein Kollisionsrisikoverwaltungsmodul (205), das sogenannte ACA, umfasst, wobei das COA und das ACA so ausgebildet sind, dass sie ein Verfahren zur Verwaltung des Kollisionsschutzes und Stationsbewahrung des Raumfahrzeugs nach einem der Ansprüche 1 bis 16 implementieren.

## Claims

1. A method for managing collision avoidance and station-keeping of a spacecraft (1), the spacecraft comprising a propulsion (204) and attitude control (205) system, a navigation system (201) including a GNSS (203), and telecommunication members (206) for exchanging data with a ground segment, comprising the following steps:
- the spacecraft receives conjunction data messages, hereinafter noted CDM, sent by the ground segment, said CDM being related to a close approach with at least one secondary object liable to collide with the spacecraft, each of said CDMs describing parameters of identification, position, speed, size and covariance of the secondary object as well as a time of closest approach date called TCA date:
- at each orbit, at a defined position on the orbit, activating, on board the spacecraft, an autonomous orbit control module (207), hereinafter referred to as COA, for the establishment of a plan corresponding to the current orbit, referred to as a current risk-free plan, the current risk-free plan being in the form of a station-keeping maneuver plan (14, 15) at least over a risk horizon, the risk horizon comprising the current orbit and extending to the orbit containing the closest TCA date among the TCA dates of the CDMs received,
- a filtering module on board the spacecraft, performs preliminary filtering of the CDMs received according to geometric and/or time criteria, to establish a list of CDMs at risk,
- in the case where the preliminary filtering results in at least one CDM at risk, activating, on board the spacecraft, a collision risk management module (208), hereinafter referred to as ACA, which
- estimates a level of collision risk, referred to as on-board risk level, based on on-board navigation data provided by the GNSS (203) propagated at the TCA date of said CDM at risk,
- and develops a maneuver plan on a control horizon, referred to as current station-keeping and avoidance plan, to ensure both continued operation within a mission window (301-302) and reduction of the risk of collision with the secondary object, the control horizon comprising a predetermined number of orbits, including the current orbit, and being lower than the risk horizon, the current station-keeping and avoidance plan being developed as follows:
- if the previously evaluated on-board risk level is less than or equal to a predefined risk threshold, referred to as the on-board risk threshold, the ACA maintains the risk-free plan as the current plan for station-keeping and avoidance,
- if the previously evaluated on-board risk level is greater than the on-board risk threshold, the ACA develops a new maneuver plan from the current risk-free plan, by eliminating at least one station-keeping maneuver from said current risk-free plan and/or replacing at least one station-keeping maneuver from said current risk-free plan with an additional maneuver (16, 17) for remaining within the mission window and avoidance, referred to as an avoidance maneuver, with the new maneuver plan becoming the current station-keeping and avoidance plan,
and in that when the ACA develops the new maneuver plan from the current risk-free plan, the ACA (208) makes successive modifications based on the current risk-free plan, each modification providing a new version of the maneuver plan, and, for each of the modifications made, the ACA reevaluates the on-board risk level using the new version of the maneuver plan and based on on-board navigation data provided by the GNSS propagated on the TCA date of said CDM at risk.

2. The management method according to claim 1, wherein, when the ACA develops the new maneuver plan from the current risk-free plan, the ACA (208) successively eliminates the station-keeping maneuvers from the current risk-free plan in reverse chronological order from the TCA date of said CDM at risk, each elimination leading to a new version of the maneuver plan, and the ACA reevaluates, with each elimination, the on-board risk level using said new version of the maneuver plan, as long as the evaluated on-board risk level remains above the on-board risk threshold and the number of maneuvers eliminated is less than a predetermined maximum number of authorized eliminations, the ACA stopping the eliminations as soon as the evaluated on-board risk level is below the on-board risk threshold, the most recent version of the maneuver plan, which resulted in an on-board risk level below the on-board risk threshold, becoming the current station-keeping and avoidance plan.

3. The management method according to claim 2, wherein, if the reevaluated on-board risk level remains greater than the on-board risk threshold after eliminating a number of maneuvers of the current risk-free plan equal to the predetermined maximum number of eliminations authorized, the ACA eliminates all maneuvers of the current risk-free plan and calculates a set of avoidance maneuvers on the control horizon, this calculation taking both station-keeping and avoidance into account, said set of avoidance maneuvers becoming the current station-keeping and avoidance plan.

4. The method according to one of claims 1 to 3, wherein, for the calculation of any avoidance maneuver, the ACA solves a constrained optimization problem with the objective of minimizing a CoPoC risk function and the constraint of remaining within the mission window, the CoPoC function corresponding to a maximum probability of collision in predefined ranges of contraction and expansion of the covariances of the spacecraft and the secondary object at the TCA date.

5. The method according to one of claims 1 to 4, wherein the ACA sends the current station-keeping and avoidance plan back to the control system for execution.

6. The method according to one of claims 1 to 5, wherein the preliminary filtering of the CDMs comprises a time-filtering step consisting in selecting, from the CDMs received, the CDM(s) whose time difference to the TCA date is less than a predetermined number of hours.

7. The method according to one of claims 1 to 6, wherein, the preliminary filtering of the CDMs received comprises a geometric filtering step consisting in, for each of the CDMs received or each of the CDMs retained at the end of the time filtering step:
- calculating a distance between a forecast position of the spacecraft and an assumed position of the secondary object on the TCA date of said CDM,
- selecting the CDM(s) for which the previously calculated distance is less than a predetermined filtering distance.

8. The method according to one of claims 1 to 7, wherein the propagation of the on-board navigation data provided by the GNSS is carried out with a propagation model based on a terrestrial gravitational potential model, a lunar-solar disturbance model and an atmospheric model integrating solar activity parameters and drag parameters provided by the ground segment.

9. The method according to one of claims 1 to 8, wherein any estimation of the on-board risk level comprises:
- calculating the propagation of the orbit and the covariance of the spacecraft up to the TCA date of said CDM at risk, according to the orbit of the spacecraft provided by the GNSS and the risk-free maneuver plan or the new version of the maneuver plan,
- calculating the propagation of the orbit and the covariance of the secondary object at the assumed TCA date of said CDM at risk,
- adjusting the TCA date, and correcting the orbits and covariances of the spacecraft and the secondary object propagated to the adjusted TCA date,
- evaluating the on-board risk level is carried out on the basis of the orbits and covariances thus propagated on the adjusted TCA date.

10. The method according to one of claims 1 to 9, wherein the spacecraft receives a mission plan (100) from the ground segment, which mission plan defines mission slots (102) reserved for the mission and free slots (103) that can be used for scheduling maneuvers, the station-keeping maneuvers calculated by the COA and the avoidance maneuver(s) calculated by the ACA being forecast on free slots of the mission plan.

11. The method according to claim 10, wherein the avoidance maneuver(s) calculated by the ACA are forecast on free slots of the mission plan preceding an avoidance date at the latest, the avoidance date at the latest preceding the TCA date by a predetermined number of orbits or hours.

12. The method according to one of claims 1 to 11, wherein, for the development of the current station-keeping and avoidance plan, the mission window is a nominal mission window or an extended mission window, the nominal mission window or the extended mission window being predetermined consistent with the mission.

13. The method according to one of claims 1 to 12, wherein to verify that the spacecraft remains within the mission window, the ACA uses a predictive model based on a quadratic course of the spacecraft's position on the orbit, which predictive model is provided to the ACA by the COA with the risk-free maneuver plan of the current orbit, said predictive model being updated by the COA at each activation of the COA during each orbit (for example, at each ascending node of the orbit) according to various flight parameters, including a difference between a theoretical date of passage at the ascending node, provided in the form of ephemeris by the ground, and an on-board calculated date of passage at the ascending node of the current orbit.

14. The method according to one of claims 1 to 13, wherein, following the development of the current station-keeping and avoidance plan, a monitoring method is implemented over the control horizon, wherein:
- the on-board risk level is reevaluated at each subsequent activation of the COA with said current station-keeping and avoidance plan and with current navigation data provided in real time by the GNSS and propagated on the TCA date of said CDM at risk,
- if the on-board risk level does not decrease or if the spacecraft's current position calculated on board deviates from a position predicted by the ACA, the ACA develops a corrected current station-keeping and avoidance plan, from the current station-keeping and avoidance plan, by eliminating all upcoming maneuvers on the control horizon and by recalculating new avoidance maneuvers for keeping within the mission window and avoidance.

15. The method according to claim 14, wherein the ACA uses a predictive model based on a quadratic course of the spacecraft's position on the orbit to verify that the spacecraft remains within the mission window, and wherein the monitoring method further comprises verifying said quadratic model, which triggers the ACA to develop the current corrected station-keeping and avoidance plan in the event of a detected divergence in the quadratic model.

16. The method according to one of claims 1 to 15, wherein the spacecraft maneuvers in low orbit and wherein the mission window requires keeping in Position on Orbit and in RAAN.

17. A spacecraft (1) comprising a propulsion (201) and attitude control system, a navigation system (202) including a GNSS, telecommunication members (203) for exchanging data (TC, TM) with a ground segment, **characterized in that** it comprises an autonomous orbit control module (204), referred to as COA, and a collision risk management module (205), referred to as ACA, which COA and ACA are configured to implement a method for managing collision avoidance and station-keeping of the spacecraft according to any one of claims 1 to 16.
